# EUROPEAN PATENT SPECIFICATION

(11) **EP 3 119 702 B1**
(45) Date of publication and mention of the grant of the patent: **12.02.2020**
(21) Application number: 16744561.8
(22) Date of filing: 13.05.2016
(51) Int. Cl.: B65D 85/804

(54) **A CAPSULE, A SYSTEM FOR PREPARING A POTABLE BEVERAGE FROM SUCH A CAPSULE AND USE OF SUCH A CAPSULE IN A BEVERAGE PREPARATION DEVICE**
KAPSEL, SYSTEM ZUR VORBEREITUNG VON GETRÄNKEN UND VERWENDUNG DIESER KAPSELN
CAPSULE, SYSTEME DE PREPARATION DES BOISSONS ET L'USAGE DES CAPSULES

(30) Priority: 15.05.2015 WO PCT/NL2015/050352; 15.05.2015 WO PCT/NL2015/000018; 15.05.2015 WO PCT/NL2015/050349; 03.09.2015 WO PCT/NL2015/050611
(43) Date of publication of application: 25.01.2017
(73) Proprietor: Koninklijke Douwe Egberts B.V., 3532 AD Utrecht (NL)
(72) Inventor: DIJKSTRA, Hielke, 3532 AD Utrecht (NL); GROOTHORNTE, Arend Hendrik, 3532 AD Utrecht (NL); VAN GAASBEEK, Erik Pieter, 3532 AD Utrecht (NL); OTTENSCHOT, Marc Henrikus Joseph, 3532 AD Utrecht (NL); KAMERBEEK, Ralf, 3532 AD Utrecht (NL); EIJSACKERS, Armin Sjoerd, 3532 AD Utrecht (NL); FLAMAND, John Henri, 3532 AD Utrecht (NL); HALLIDAY, Andrew Michael, 3532 AD Utrecht (NL); HANSEN, Nicholas Andrew, 3532 AD Utrecht (NL)
(74) Representative: V.O.
(86) International application number: PCT/NL2016/050350
(87) International publication number: WO 2016/186496

(56) References cited:
- WO-A1-2006/045536
- WO-A1-2007/122206
- WO-A1-2014/118812
- WO-A1-2014/184652
- WO-A1-2014/184653
- WO-A2-2014/012779

## Description

The invention relates to a capsule containing a substance for the preparation of a potable beverage by extracting and/or dissolving the substance by means of supplying a fluid under pressure into the capsule, wherein the capsule comprises an aluminum capsule body having a central capsule body axis, the aluminum capsule body being provided with a bottom, a side wall and an outwardly extending flange, the capsule further comprising an aluminum cover attached to the outwardly extending flange, the cover hermetically closing the capsule, wherein the capsule further comprises a sealing member at the outwardly extending flange for providing a fluid sealing contact with an enclosing member of a beverage preparation device if the capsule is positioned in the enclosing member of the beverage preparation device and the enclosing member is closed by means of a closing member of the beverage preparation device, such as an extraction plate of the beverage preparation device, such that the outwardly extending flange of the capsule and at least a portion of the sealing member of the capsule are sealingly engaged between the enclosing member and the closing member of the beverage preparation device, wherein the enclosing member of the beverage preparation device comprises an annular element having a central annular element axis and a free contact end, the free contact end of the annular element optionally being provided with a plurality of radially extending open grooves.

The invention also relates to a system for preparing a potable beverage from a capsule using a fluid supplied under pressure into the capsule comprising:
a beverage preparation device comprising an enclosing member for receiving the capsule, wherein the enclosing member comprises fluid injection means for supplying fluid under pressure into the capsule, wherein the beverage preparation device further comprises a closing member, such as an extraction plate, for closing the enclosing member of the beverage preparation device, wherein the enclosing member of the beverage preparation device further comprises an annular element having a central annular element axis and a free contact end, the free contact end of the annular element optionally being provided with a plurality of radially extending open grooves;
a capsule containing a substance for the preparation of a potable beverage by extracting and/or dissolving the substance by means of the fluid supplied under pressure into the capsule by the fluid injection means of the beverage preparation device, wherein the capsule comprises an aluminum capsule body having a central capsule body axis, the aluminum capsule body being provided with a bottom, a side wall and an outwardly extending flange, the capsule further comprising an aluminum cover attached to the outwardly extending flange, the cover hermetically closing the capsule, wherein the capsule further comprises a sealing member at the outwardly extending flange for providing a fluid sealing contact with the enclosing member of the beverage preparation device if the capsule is positioned in the enclosing member of the beverage preparation device and the enclosing member is closed by means of the closing member of the beverage preparation device, such that the outwardly extending flange of the capsule and at least a portion of the sealing member of the capsule are sealingly engaged between the enclosing member and the closing member of the beverage preparation device.

Furthermore the invention relates to the use of a capsule in a beverage preparation device comprising an enclosing member for receiving the capsule, wherein the enclosing member comprises fluid injection means for supplying fluid under pressure into the capsule, wherein the beverage preparation device further comprises a closing member, such as an extraction plate, for closing the enclosing member of the beverage preparation device, wherein the enclosing member of the beverage preparation device further comprises an annular element having a central annular element axis and a free contact end, the free contact end of the annular element optionally being provided with a plurality of radially extending open grooves; wherein the capsule contains a substance for the preparation of a potable beverage by extracting and/or dissolving the substance by means of the fluid supplied under pressure into the capsule by the fluid injection means of the beverage preparation device, wherein the capsule comprises an aluminum capsule body having a central capsule body axis, the aluminum capsule body being provided with a bottom, a side wall and an outwardly extending flange, the capsule further comprising an aluminum cover attached to the outwardly extending flange, the cover hermetically closing the capsule, wherein the capsule further comprises a sealing member at the outwardly extending flange for providing a fluid sealing contact with the enclosing member of the beverage preparation device if the capsule is positioned in the enclosing member of the beverage preparation device and the enclosing member is closed by means of the closing member of the beverage preparation device, such that the outwardly extending flange of the capsule and at least a portion of the sealing member of the capsule are sealingly engaged between the enclosing member and the closing member of the beverage preparation device.

Such a capsule, system and use are known from WO2014/184653. In a system known from EP-B-1 700 548 the capsule is provided with a sealing member having the shape of a step, i.e. a sudden increase of the diameter of the side wall of the capsule, and the enclosing member of this known system has a sealing surface acting on the sealing member to provide deflection of the sealing member, the sealing surface being inclined so that the deflection of the sealing member is an inwards and downwards deformation of the step. Furthermore in the known system the enclosing member comprises a capsule holder and a manually operated or an automatic mechanism for relative displacement of the enclosing member and the capsule holder. The manually operated or an automatic mechanism applies a force on the sealing member of the capsule when the enclosing member closes on the capsule holder. This force should ensure the fluid tight seal between the enclosing member and the capsule. Because the manually operated or an automatic mechanism is arranged to be moved relative to the base, the sealing capabilities of the system can depend on the pressure of the fluid injected by the fluid injection means. If the pressure of the fluid increases, the force between the sealing member of the capsule and the free end of the enclosing member increases too and thereby the force between the sealing member of the capsule and the free end of the enclosing member increases also. Such a system is described further on. The sealing member of the capsule must be arranged such that upon reaching the maximum fluid pressure in the enclosing member the sealing member should still provide a fluid sealing contact between the enclosing member and the capsule. However, the sealing member must also be arranged such that prior to, or at the start of, brewing when the pressure of the fluid in the enclosing member outside the capsule is relatively low, the sealing member also provides a fluid sealing contact between the enclosing member and the capsule. If at the start of brewing, there would not exist a fluid sealing contact between the capsule and the enclosing member, leakage will occur. However, if leakage occurs there is a real chance that the pressure in the enclosing member and outside the capsule will not sufficiently increase for increasing the force on the sealing member by means of the free end of the enclosing member if the manually operated or an automatic mechanism moves the enclosing member towards the capsule holder. Only if there is a sufficient initial sealing, the pressure in the enclosing member will increase whereby also the force of the free end of the enclosing member acting on the sealing member of the capsule will increase for providing a sufficient fluid sealing contact at also the increased fluid pressure. Moreover, this increased fluid pressure outside the capsule also provides an increased fluid pressure inside the capsule which is essential if the capsule is provided with a cover which is arranged to tear open on relief members of the capsule holder (also called an extraction plate) of the beverage preparation device under the influence of fluid pressure in the capsule.

It follows from the above that the sealing member is a member which is very critical in design. It should be able to provide a fluid sealing contact between the enclosing member and the capsule at a relatively low fluid pressure if only a relatively small force is applied on the sealing member by means of the free end of the enclosing member but it should also provide a fluid sealing contact at a much higher fluid pressure in the enclosing member outside the capsule if a higher force is applied by means of the free end of the enclosing member to the sealing member of the capsule. In particular when the free contact end of the enclosing member is provided with radially extending open grooves which act as air inlet passage once the force between the enclosing member and the capsule holder is released so that it is easier for a user to take out the capsule, the sealing member must also be able to 'close' the radially extending open grooves to provide an effective seal.

It is an object of the invention to provide an alternative sealing member which is relatively easy to manufacture, which is environmentally friendly if the capsule is disposed of after use and/or which provides a satisfactory sealing both at a relatively low fluid pressure if only a relatively small force is applied on the sealing member by means of the free end of the enclosing member (sometimes also called initial seal) and at a much higher fluid pressure if a higher force is applied (e.g. during brewing) by means of the free end of the enclosing member to the sealing member of the capsule, even in case of an enclosing member of which the free contact end is provided with radially extending open grooves.

The invention has also as an object to provide an alternative system for preparing a potable beverage from a capsule and to provide an alternative use of a capsule in a beverage preparation device.

In accordance with the invention there is provided in a first aspect a capsule according to claim 1. Since the sealing member is integral with the outwardly extending flange and comprises at least one projection of which the top exerts a radial force on the free contact end of the annular element if the capsule is positioned in the enclosing member of the beverage preparation device and the enclosing member is closed by means of a closing member of the beverage preparation device a satisfactory sealing can be obtained. Such a sealing member is relatively easy to manufacture. Furthermore the capsule can provide a satisfactory sealing with the free contact end provided with radially extending open grooves. In addition the sealing facilitates positioning of the capsule inside the beverage preparation device.

In this application the existence of a fluid sealing contact means that 0-6%, preferably 0-4%, more preferably 0-2.5% of the total fluid supplied to the enclosing member for preparing the beverage may leak away due to leakage between the free contact end and the sealing member of the capsule.

The invention is in particular advantageous when in an embodiment of a capsule the capsule contains an extractable product as substance for the preparation of a potable beverage, the extractable product preferably being 5-20 grams, preferably 5-10 grams, more preferably 5-7 grams of an extractable product, such as roasted and ground coffee.

In an embodiment of a capsule according to the invention which is in particular easy to manufacture the outer diameter of the outwardly extending flange of the capsule is larger than the diameter of the bottom of the capsule. Preferably, the outer diameter of the outwardly extending flange is approximately 37.1 mm and the diameter of the bottom of the capsule is about 23.3 mm.

The invention is in particular advantageous when in an embodiment of a capsule the thickness of the aluminum capsule body is such that it is deformed easily if the capsule is positioned in the enclosing member of the beverage preparation device and the enclosing member is closed by means of a closing member of the beverage preparation device, preferably the thickness of the aluminum capsule body is 20 to 200 micrometer, preferably 100 micrometer.

The invention is in particular advantageous when in an embodiment of a capsule the thickness of the aluminum cover is 15 to 65 micrometer, preferably 30-45 micrometer and more preferably 39 micrometer.

In an embodiment of a capsule according to the invention the wall thickness of the aluminum cover is smaller than the wall thickness of the aluminum capsule body.

In a further embodiment of a capsule according to the invention the aluminum cover is arranged to tear open on a closing member of the beverage preparation device, such as an extraction plate of the beverage preparation device under the influence of fluid pressure in the capsule.

In an embodiment of a capsule according to the invention which is in particular easy to manufacture the side wall of the aluminum capsule body has a free end opposite the bottom, the outwardly extending flange extending from the free end of the side wall in a direction at least substantially transverse to the central capsule body axis. Preferably, the outwardly extending flange comprises a curled outer edge, which is beneficial in obtaining for a satisfactory sealing with the free contact end provided with radially extending open grooves. The radius about the central capsule body axis of an inner edge of the curled outer edge of the outwardly extending flange is preferably at least 32 mm, so that clearance from the annular end surface of the enclosure member is ensured. It is then preferred that the sealing member is positioned between the free end of the side wall of the aluminum capsule body and an inner edge of the curled outer edge of the outwardly extending flange to obtain a still further satisfactory sealing.

To ensure that the curled outer edge does not interfere with operation of a wide variety of commercially available and future beverage preparation apparatuses, the curled outer edge of the outwardly extending flange has a largest dimension of about 1.2 millimeter.

The invention is in particular beneficial for capsules of which the inner diameter of the free end of the side wall of the aluminum capsule body is about 29.5 mm. The distance between the free end of the side wall of the aluminum capsule body and an outermost edge of the outwardly extending flange can be about 3.8 millimeter. The preferred height of the aluminum capsule body is about 28.4 mm.

In an embodiment of a capsule according to the invention which after use is easier for a user to take out of a beverage preparation device the aluminum capsule body is truncated, wherein preferably the side wall of the aluminum capsule body encloses an angle with a line transverse to the central capsule body axis of about 97.5°.

In an advantageous embodiment of a capsule according to the invention the bottom of the aluminum capsule body has a largest inner diameter of about 23.3 mm. It is preferred that the bottom of the aluminum capsule body is truncated, preferably having a bottom height of about 4.0 mm and that the bottom further has a generally flat central portion opposite the cover having a diameter of about 8.3 mm.

In practically all cases a satisfactory seal can be obtained in an embodiment of a capsule according to the invention in which the height of the sealing member portion to be contacted first by the free end of the enclosure member when the enclosure member is closed is at least about 0.1 mm, more preferably at least 0.2 mm and most preferably at least 0.8 mm and at most 3 mm, more preferably at most 2 mm and most preferably at most 1.2 mm.

In a preferred embodiment of a capsule according to the invention the capsule comprises an inner surface, and wherein on the inner surface of at least the side wall of the capsule an inner coating is provided. In particular when the capsule is manufactured by deep drawing the inner coating facilitates the deep drawing process. In case the aluminum cover of the capsule is attached to the outwardly extending flange by means of a sealing lacquer it is then in particular advantageous when the inner coating being composed of the same material as the sealing lacquer. In dependence of the inner coating used it is preferred that the sealing member is free from an inner coating in order to prevent crumbling off of the inner coating from the sealing member.

In a further embodiment of a capsule according to the invention the capsule comprises an outer surface, wherein on the outer surface of the capsule a color lacquer is provided. In order to facilitate in deep drawing it is preferred to provide on an outer surface of the color lacquer an outer coating. In dependence of the color lacquer and outer coating used it is preferred that the sealing member is free from a color lacquer (and consequently the outer coating) in order to prevent crumbling off of the color lacquer/outer coating from the sealing member.

In a still further embodiment of a capsule according to the invention the at least one projection comprises a projection side wall which is inclined with regard to the outwardly extending flange of the aluminum capsule body, the projection side wall being configured such that it is deformed easily if the capsule is positioned in the enclosing member of the beverage preparation device and the enclosing member is closed by means of a closing member of the beverage preparation device. This improves the force exerted on the free contact end and thus improves the sealing. It is then preferred when the distance between the projection and the side wall of the aluminum capsule body is such that the free contact end of the annular element is contacted by the projection and the side wall of the aluminum capsule body if the capsule is positioned in the enclosing member of the beverage preparation device and the enclosing member is closed by means of a closing member of the beverage preparation device.

The sealing member comprises two spaced projections, each projecting from the outwardly extending flange and a plateau between the two projections, wherein the distance between the two projections is such that the free contact end of the annular element is squeezed between converging surfaces of the two projections if the capsule is positioned in the enclosing member of the beverage preparation device and the enclosing member is closed by means of a closing member of the beverage preparation device. It is then preferred when the distance between the two projections is such that the free contact end of the annular element is contacted by the two projections if the capsule is positioned in the enclosing member of the beverage preparation device and the enclosing member is closed by means of a closing member of the beverage preparation device. In particular a satisfactory seal can be obtained when the two spaced projections and the plateau are arranged such that the free contact end of the annular element is contacted by the plateau if the capsule is positioned in the enclosing member of the beverage preparation device and the enclosing member is closed by means of a closing member of the beverage preparation device. The capsule can preferably comprise a bearing for the enclosing member of the beverage preparation device if the capsule is positioned in the enclosing member of the beverage preparation device and the enclosing member is closed by means of a closing member of the beverage preparation device, the bearing enclosing at least a portion of the free contact end of the annular element and the bearing being formed by the two projections and the plateau there between.

The plateau can be substantially flat or can comprise a curved portion. In particular advantageous is the embodiment of a capsule according to the invention in which the plateau is V-shaped. In this manner the free contact end of the annular member is squeezed between the two projections providing a satisfactory seal.

A further object of embodiments of the invention is to achieve reliable low and high pressure sealings against the free contact end of the enclosing member, in particular with little sensitivity to variations in diameter, thickness and shape of the of the free contact end, which occur between different models of brewing systems, and non-circularity (e.g. ovality) of the free contact end and/or of the flange of the capsule. The latter may for instance result from compression of capsules in a shopping bag or trolley. In an embodiment of the invention, this object is achieved by providing that a first one of the two projections projects further from a base portion of the outwardly extending flange, to which base portion the cover is attached, than a second one of the two projections.

When the enclosing member closes, if a too large portion of the one of the projections projecting furthest from the base portion is located under the axially in line with the free contact end, it is urged away radially so that the free contact end passes alongside that furthest projecting one of the projections. This radial displacement also entrains the other one of the projections radially towards the free contact end, so that it is accurately positioned for firm sealing engagement with the free contact end. Moreover, the furthest projecting one of the projections is deformable in radial sense over a relatively large distance, so that it can accommodate to relatively large deviations, while the other one of the projections is relatively stiff, which is advantageous for exerting a firm sealing pressure.

If the first one of the projections is the inner one of the two projections, the capsule is particularly suitable for use in commercially available apparatuses such as the Citiz, Lattisima, U, Maestria, Pixie, Inissia and Essenza in which the free contact end of the annular element is provided with the plurality of radially extending open grooves, the grooves being deeper in the inner surface portion than in the outer surface portion of the free contact end or the grooves being absent in the outer surface portion of the free contact end. In such apparatuses, a reliable and accurately positioned seal is obtained between the second one of the projections and the relatively smooth outer surface portion of the free contact end.

For achieving a reliable seal, it is also advantageous if the first one of the two projections has an extreme top end extending around the capsule axis at a diameter of 31.9 to 32.4 mm and the second one of the two projections has an extreme top end extending around the capsule axis at a diameter of 29.2 to 29.8 mm. Thus, when used in commercially available coffee making apparatuses such as the Citiz, Lattisima, U, Maestria, Pixie, Inissia and Essenza, an outer edge area of the free end of the enclosing member is firmly pressed against the second projection.

If the plateau is axially spaced from the cover, this area between the first and second projections is displaced axially towards the cover as the enclosing member is closed by means of the closing member of the beverage preparation device. This causes the first projection and the second projection to deform towards the free contact end of the annular element, due to tilting and "rolling off of the first projection and the second projection, thereby increasing the radial contact pressure exerted against the free contact end of the annular element, which contributes to achieving a satisfactory seal.

In accordance with the invention there is provided in a second aspect a system for preparing a potable beverage according to claim 19.

Since the sealing member is integral with the outwardly extending flange and comprises at least one projection of which the top exerts a radial force on the free contact end of the annular element if the capsule is positioned in the enclosing member of the beverage preparation device and the enclosing member is closed by means of a closing member of the beverage preparation device a satisfactory sealing can be obtained. Such a sealing member is relatively easy to manufacture. Furthermore the capsule can provide a satisfactory sealing with the free contact end provided with radially extending open grooves.

The projections may project from at least one base portion of the flange to which base portion the cover is attached. The projections may project axially from the base portion in a direction away from the cover. The projection top may constitute a portion of the projection, for instance a half, a third or a quarter of the projection, that is axially most distal from the base portion.

Regarding the preferred embodiments of the system as mentioned in the dependent claims which relate to the same features as the features of the dependent claims of the capsule reference is made to the above.

The invention is particularly suitable in a system according to the invention wherein, in use, the maximum fluid pressure in the enclosing member of the beverage preparation device is in the range of 6-20 bar, preferably between 12 and 18 bar. Even at such high pressures a satisfactory seal between capsule and beverage preparation device can be obtained.

Preferably the system is arranged such that, in use, during brewing, a free end of the enclosing member of the beverage preparation device exerts a force F2 on the sealing member of the capsule to provide a fluid sealing contact between the outwardly extending flange of the capsule and the enclosing member of the beverage preparation device, wherein F2 is in the range of 500-1500 N preferably in the range of 750-1250 N when the fluid pressure P2 in the enclosing member of the beverage preparation device outside the capsule is in the range of 6-20 bar, preferably between 12 and 18 bar. In particular the system is arranged such that, in use, prior to or at the start of brewing, a free end of the enclosing member of the beverage preparation device exerts a force F1 on the sealing member of the capsule to provide a fluid sealing contact between the outwardly extending flange of the capsule and the enclosing member of the beverage preparation device, wherein F1 is in the range of 30-150 N preferably in the range of 40-150 N, more preferably 50-100 N, when the fluid pressure P1 in the enclosing member of the beverage preparation device outside the capsule is in the range of 0.1 - 4 bar, preferably between 0.1 - 1 bar.

In an embodiment of a system according to the invention wherein the plurality of radially extending open grooves are uniformly spaced relative to each other in tangential direction of the free contact end of the annular element of the beverage preparation device so that it is easier for a user to take out the capsule while a satisfactory seal between capsule and beverage preparation device can still be provided.

In an advantageous embodiment of a system according to the invention the longest tangential width of each groove (top to top, i.e. equal to the groove to groove pitch) is 0.9 - 1.1 mm, preferably 0.95 to 1.05 mm, more preferably 0.98 to 1.02 mm, wherein a maximal height of each groove in an axial direction of the enclosing member of the beverage preparation device is 0.01 - 0.09 mm, preferably 0.03 to 0.07 mm, more preferably 0.045 to 0.055 mm, most preferred 0.05 mm and wherein the number of grooves is 90 to 110, preferably 96. The radial width of the annular end surface at the location of the grooves may for instance be 0.05- 0.9 mm, preferably 0.2- 0.7 mm and more preferably 0.3 - 0.55 mm. The invention is in particular suitable when applied to an embodiment of a system according to the invention in which during use when the closing member of the beverage preparation device closes the enclosing member of the beverage preparation device at least the free contact end of the enclosing member of the beverage preparation device can move relative to the closing member of the beverage preparation device under the effect of the pressure of the fluid in the enclosing member of the beverage preparation device towards the closing member of the beverage preparation device for applying the maximum force between the flange of the capsule and the free end of the enclosing member of the beverage preparation device. The enclosing member may comprise a first part and a second part wherein the second part comprises the free contact end of the enclosing member wherein the second part can move relative to the first part between a first and second position. The second part can move from the first positon towards the second position in the direction of the closing member under the influence of fluid pressure in the enclosing member. The force F1 as discussed above may be reached if the second part is in the first position with a fluid pressure P1. The force F2 as discussed above may be reached if the second part is moved towards the second position under the influence of the fluid pressure P2 in the enclosing member.

In accordance with the invention there is provided in a third aspect a use of a capsule according to claim 24. Regarding the advantage of the inventive use and the preferred embodiments of the use as mentioned in the dependent claims which relate to the same features as the features of the dependent claims of the capsule or the dependent claims of the system reference is made to the above.

The invention will now be further elucidated by means of, nonlimiting, examples referring to the drawing, in which
Fig. 1 shows a schematic representation of an embodiment of a system according to the invention;
Fig. 2 in a perspective view shows an embodiment of a beverage preparation device of a system according to the invention showing the free contact end of the enclosing member of the beverage preparation device with the plurality of radially extending open grooves;
Fig. 3A in cross section shows an embodiment of a capsule according to the invention before use;
Fig. 3B shows an enlarged detail of a the capsule of Fig. 3A showing the outwardly extending flange and the sealing member;
Fig. 3C shows an enlarged detail of the outwardly extending flange of the capsule in Figures 3A and 3B after use;
Fig. 4A shows a first embodiment of a sealing member at the outwardly extending flange of a capsule not according to the invention;
Fig. 4B shows a second embodiment of a sealing member at the outwardly extending flange of a capsule not according to the invention;
Fig. 4C shows a third embodiment of a sealing member at the outwardly extending flange of a capsule not according to the invention;
Fig. 4D shows a fourth embodiment of a sealing member at the outwardly extending flange of a capsule not according to the invention;
Fig. 4E shows a fifth embodiment of a sealing member at the outwardly extending flange of a capsule not according to the invention;
Fig. 4F shows a sixth embodiment of a seal member at the outwardly extending flange of a capsule not according to the invention;
Fig. 4G shows a seventh embodiment of a seal member at the outwardly extending flange of a capsule according to the invention;
Figs. 5A and 5B are schematic representations of successive stages of deformation of the seventh embodiment of a seal member at the outwardly extending flange of a capsule according to the invention if the capsule is positioned in the enclosing member of the beverage preparation device and as the enclosing member is closed by means of a closing member of the beverage preparation device; and
Fig. 6 is a schematical cross-section view of a deformed flange portion and a portion of an enclosing member where a bridge is present between inner and outer rims of a free end of the enclosing member.

In the figures and the following description, like reference numerals refer to like features.

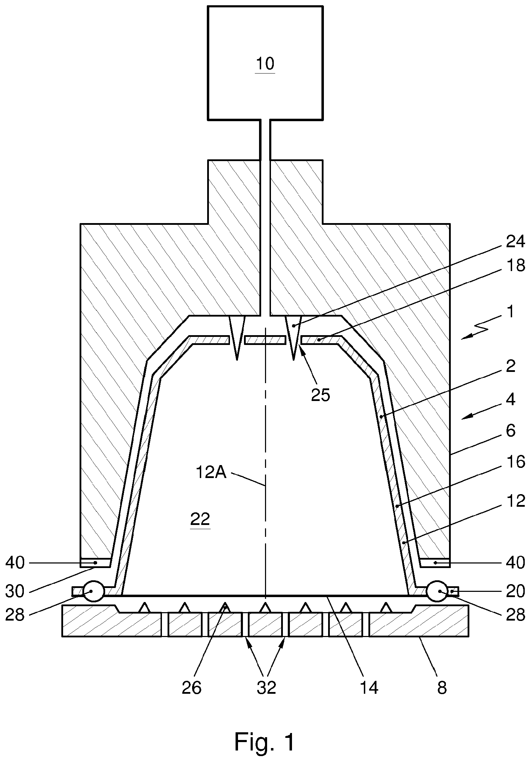

Fig. 1 shows a schematic representation, in cross sectional view, of an embodiment of a system 1 for preparing a potable beverage from a capsule using a fluid supplied under pressure into the capsule. The system 1 comprises a capsule 2, and a beverage preparation device 4. The device 4 comprises enclosing member 6 for holding the capsule 2. The device 4 further comprises a closing member, such as an extraction plate, 8 for supporting the capsule 2.

In Fig. 1 a gap is drawn between the capsule 2, the enclosing member 6 and the extraction plate 8 for clarity. It will be appreciated that, in use, the capsule 2 may lie in contact with the enclosing member 6 and the extraction plate member 8. Commonly, the enclosing member 6 has a shape complementary to the shape of the capsule 2. The beverage preparation device 4 further comprises a fluid injection means 10 for supplying an amount of a fluid, such as water, under a pressure in the range of 6-20 bar, preferably between 12 and 18 bar, to the exchangeable capsule 2.

In the example shown in Fig. 1, the exchangeable capsule 2 comprises an aluminum capsule body 12 having a central capsule body axis 12A and an aluminum cover 14. In the present context, the meaning of 'aluminum' is understood to also include aluminum alloy. In this example, the aluminum capsule body 12 comprises a side wall 16, a bottom 18 closing the side wall 16 at a first end, and a outwardly extending flange 20 extending outwardly of the circumferential wall 16 at a second end opposite the bottom 18. The side wall 16, the bottom 18 and the cover 14 enclose an inner space 22 comprising a substance for the preparation of a potable beverage by extracting and/or dissolving the substance. Preferably the substance is an extractable product for the preparation of a potable beverage, the extractable product preferably being 5-20 grams, preferably 5-10 grams, more preferably 5-7 grams of roasted and ground coffee for the preparation of a single beverage. The capsule is initially sealed, i.e. is hermetically closed prior to use.

The system 1 of Fig. 1 comprises bottom piercing means 24 for piercing the bottom 18 of the capsule 2 for creating at least one entrance opening 25 in the bottom 18 for supplying the fluid to the extractable product through the entrance opening 25.

The system 1 of Fig. 1 further comprises cover piercing means 26, here embodied as protrusions of the closing member 8, for piercing the cover 14 of the capsule 2. The cover piercing means 26 may be arranged to tear the cover 14 once a (fluid) pressure inside the inner space 22 exceeds a threshold pressure and presses the cover 14 against the cover piercing means 26 with sufficient force. The aluminum cover 14 thus is arranged to tear open on the closing member 8 of the beverage preparation device under the influence of fluid pressure in the capsule.

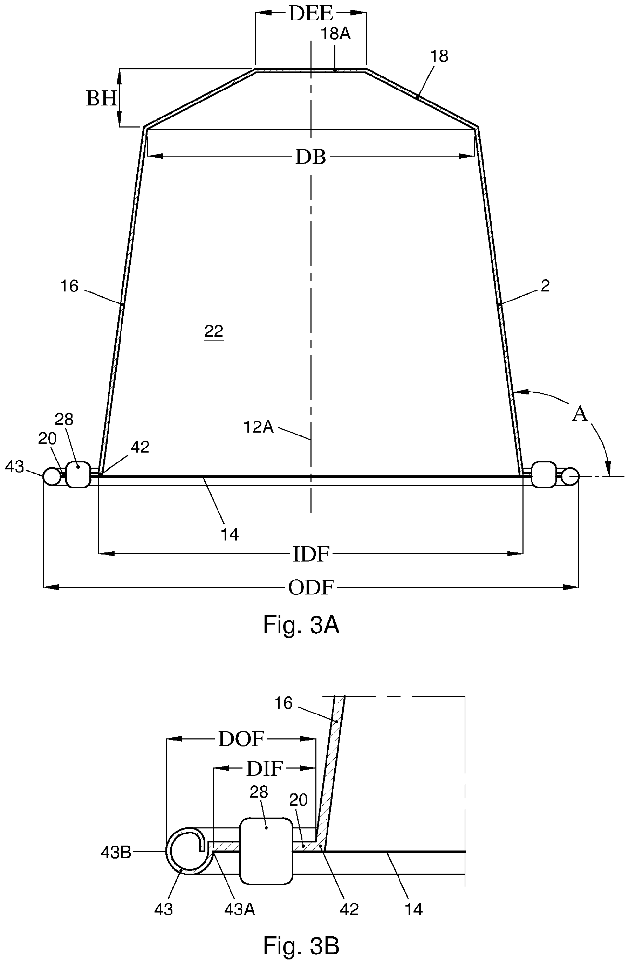

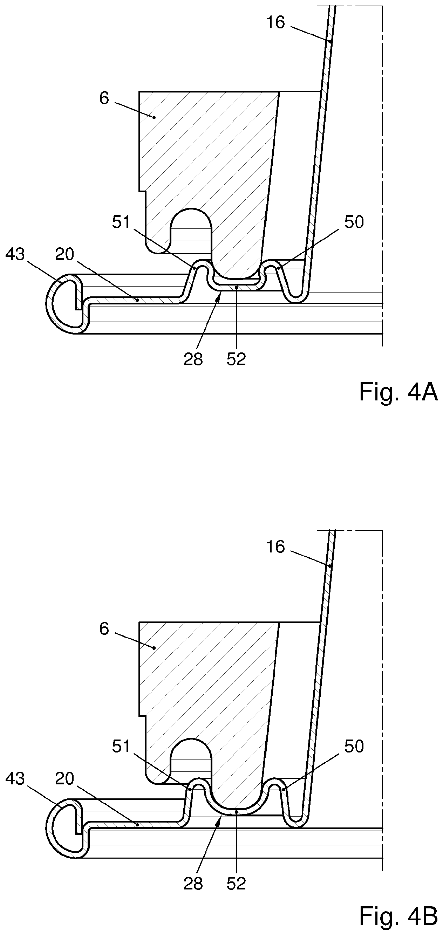

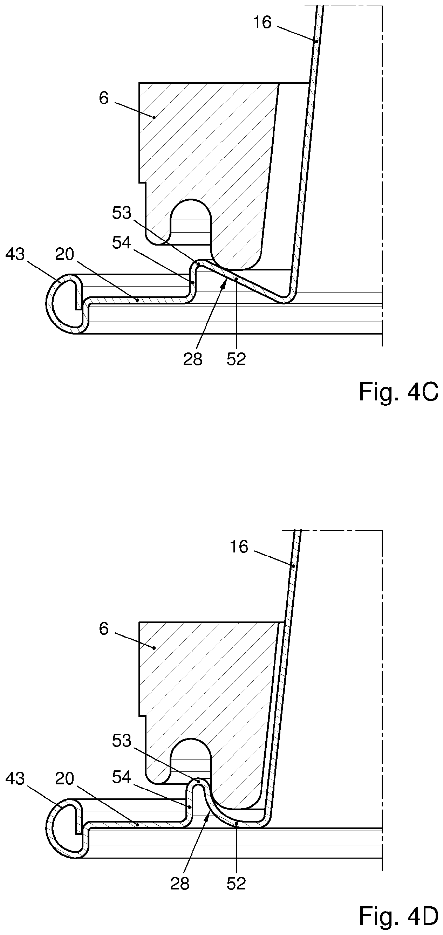

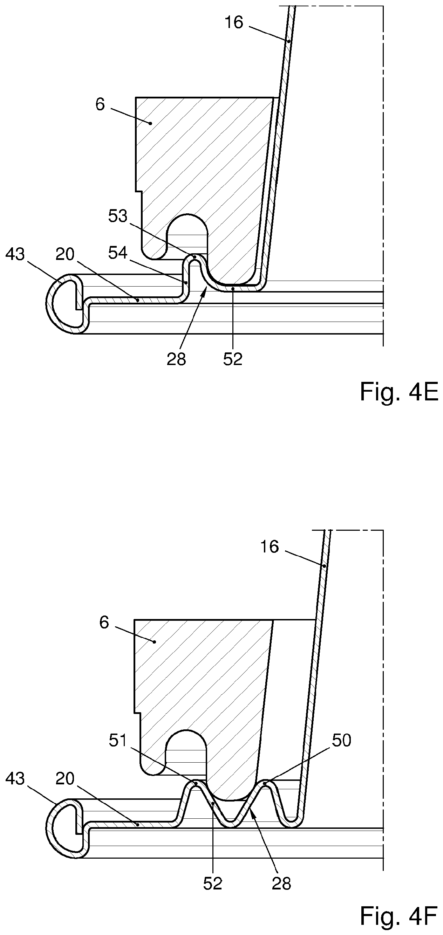

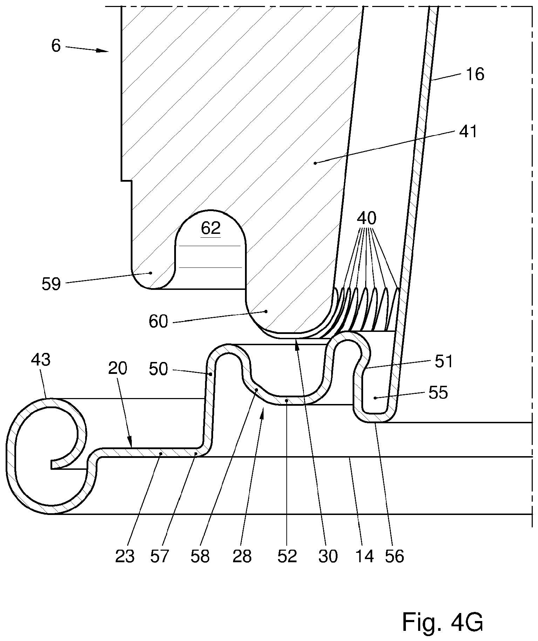

The capsule 2 further comprises a sealing member 28 integral with the outwardly extending flange, in Figures 1, 3A and 3B indicated as a general box but more detailed described with regard to Figure 4, which sealing member 28 is arranged for providing a fluid sealing contact with the enclosing member 6 if the capsule 2 is positioned in the enclosing member 6 and the enclosing member 6 is closed by means of the extraction plate 8, such that the outwardly extending flange 20 of the capsule 2 and at least a portion of the sealing member 28 are sealingly engaged between the enclosing member 6 and the extraction plate 8. This means that a fluid sealing contact between the sealing member and the free contact end is established.

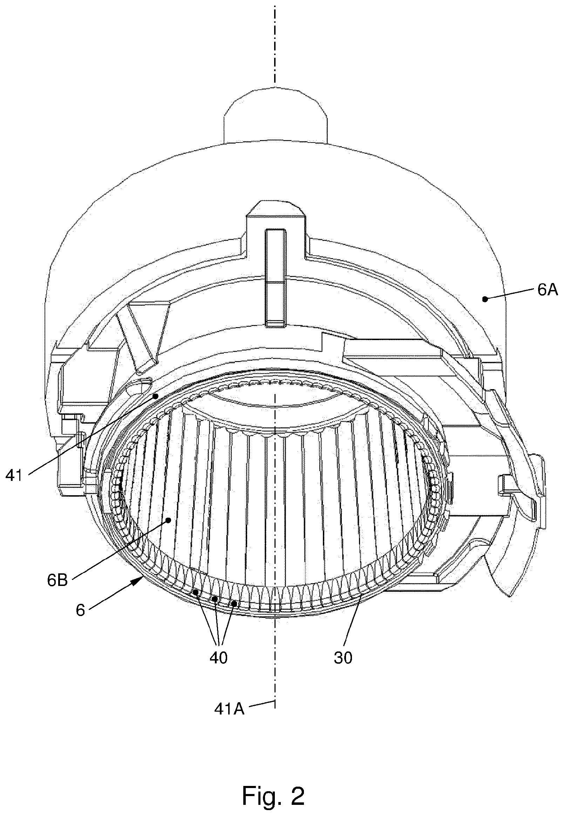

As shown in Figure 2 the enclosing member 6 of the beverage preparation device comprises an annular element 41 having a central annular element axis 41A and a free contact end 30. The free contact end 30 of the annular element 41 is provided with a plurality of radially extending open grooves 40. The plurality of radially extending open grooves 40 are uniformly spaced relative to each other in tangential direction of the free contact end 30 of the annular element 41. The longest tangential width of each groove 40 is 0.9 - 1.1 mm, preferably 0.95 to 1.05 mm, more preferably 0.98 to 1.02 mm, wherein a maximal height of each groove 40 in an axial direction of the enclosing member 6 is 0.01 - 0.09 mm, preferably 0.03 to 0.07 mm, more preferably 0.045 to 0.055 mm, and most preferred 0.05 mm. The number of grooves 40 lies in the range of 90 to 110, preferably 96. Usually, the radial width of the free end at the location of the grooves is 0.05 - 0.9 mm, more specifically 0.2 - 0.7 mm, more specifically 0.3 - 0.55 mm.

An embodiment of a capsule is shown more detailed in Figures 3A and 3B. In the shown embodiment the outer diameter ODF of the outwardly extending flange 20 is larger than the diameter DB of the bottom 18 of the capsule 2. In the shown embodiment the outer diameter ODF of the outwardly extending flange 20 is approximately 37.1 mm and the diameter DB of the bottom 18 is about 23.3 mm. The thickness of the aluminum capsule body 12 is such that it is deformed easily if the capsule is positioned in the enclosing member of the beverage preparation device and the enclosing member is closed by means of a closing member of the beverage preparation device, preferably the thickness of the aluminum capsule body is 100 micrometer, but in other embodiments the thickness can be 20 to 200 micrometer.

In the shown embodiment, the wall thickness of the aluminum cover 14 is 39 micrometer. The wall thickness of the aluminum cover 14 is preferably smaller than the thickness of the aluminum capsule body 12.

The side wall 16 of the aluminum capsule body 12 has a free end 42 opposite the bottom 18. The inner diameter IDF of the free end 42 of the side wall 16 of the aluminum capsule body 12 is about 29.5 mm. The outwardly extending flange 20 extends from that free end 42 in a direction at least substantially transverse to the central capsule body axis 12A. The outwardly extending flange 20 comprises a curled outer edge 43 which is beneficial for obtaining a seal between the capsule and the enclosing member. In the shown embodiment the curled outer edge 43 of the outwardly extending flange 20 has a largest dimension of about 1.2 millimeter. The distance DIF between the free end 42 of the side wall 16 of the aluminum capsule body 12 and an inner edge 43A of the curled outer edge 43 is about 2.7 mm, while the distance DOF between the free end 42 of the side wall 16 of the aluminum capsule body 12 and an outermost edge 43B of the outwardly extending flange 20 is about 3.8 millimeter. The radius about the central capsule body axis of the inner edge 43A of the curled outer edge 43 is preferably at least 32 mm.

As shown in Figures 3A and 3B the sealing member 28 is positioned between the free end of the side wall 16 of the aluminum capsule body 12 and the inner edge 43A of the curled outer edge 42 of the outwardly extending flange. The sealing member 28 is indicated as a general box, but will be described in more detail below. Irrespective of the embodiment of the sealing member 28 the height of the sealing member portion to be contacted first by the free end of the enclosure member when the enclosure member is closed is at least about 0.1 mm, more preferably at least 0.2 mm and most preferably at least 0.8 mm and at most 3 mm, more preferably at most 2 mm and most preferably at most 1.2 mm for providing a correct seal.

As can be seen from Figure 3A the aluminum capsule body 12 is truncated. In the embodiment shown, the side wall 16 of the aluminum capsule body 12 encloses an angle A with a line transverse to the central capsule body axis 12A of about 97.5°. The bottom 18 of the aluminum capsule body 12 has a largest inner diameter DB of about 23.3 mm. The bottom 18 of the aluminum capsule body 12 is also truncated, and in the shown embodiment has a bottom height BH of about 4.0 mm. The bottom 18 further has a generally flat central portion 18A opposite the cover 14, which central portion 18A has a diameter DEE of about 8.3 mm and in which central portion 18A the entrance opening(s) 25 may be made. The entrance openings may also be made in the truncated portion between the central portion 18A and the side wall 16. The total height TH of the aluminum capsule body 12 of the capsule is about 28.4 mm.

The system 1 shown in Fig. 1 is operated as follows for preparing a cup of a potable beverage, in the present example coffee, wherein the substance is roasted and ground coffee.

The capsule 2 is placed in the enclosing member 6. The extraction plate 8 is brought into contact with the capsule 2. The bottom piercing means 24 pierce the bottom 18 of the capsule 2 for creating the entrance openings 25. The fluid, here hot water under pressure, is supplied to the extractable product in the inner space 22 through the entrance openings 25. The water will wet the coffee grounds and extract the desired substances to form the coffee beverage.

During supplying the water under pressure to the inner space 22, the pressure inside the capsule 2 will rise. The rise in pressure will cause the cover 14 to deform and be pressed against the lid piercing means 26 of the extraction plate. Once the pressure reaches a certain level, the tear strength of the cover 14 will be surpassed and the cover 14 will rupture against the lid piercing means 26, creating exit openings. The prepared coffee will drain from the capsule 2 through the exit openings and outlets 32 (see Fig. 1) of the extraction plate 8, and may be supplied to a container such as a cup (not shown).

The system 1 is arranged such that prior to or at the start of brewing, the free end 30 of the enclosing member 6 exerts a force F1 on the sealing member 28 of the capsule 2 to provide a fluid sealing contact between the outwardly extending flange 20 of the capsule 2 and the enclosing member 6 of the beverage preparation device, wherein F1 is in the range of 30-150 N preferably 40-150 N, more preferably 50-100 N, when the fluid pressure P1 in the enclosing member of the beverage preparation device outside the capsule is in the range of 0.1-4 bar, preferably 0.1-1 bar. During brewing, the free end 30 of the enclosing member 6 exerts a force F2 on the sealing member 28 of the capsule 2 to provide a fluid sealing contact between the outwardly extending flange 20 of the capsule 2 and the enclosing member 6, wherein the force F2 is in the range of 500 -1500 N, preferably in the range of 750-1250 N, when the fluid pressure P2 in the enclosing member 6 of the beverage preparation device outside the capsule 2 is in the range of 6-20 bar, preferably between 12 and 18 bar. In the shown embodiment the free contact end of enclosing member 6 can move relative to the extracting plate 8 under the effect of the pressure of the fluid in the enclosing member 6 device towards the extraction plate 8 for applying the maximum force F2 between the outwardly extending flange 20 and the free end 30 of the enclosing member 6. This movement can take place during use, i.e. in particular at the start of brewing and during brewing. The enclosing member 6 has a first part 6A and a second part 6B wherein the second part comprises the free contact end 30. The second part 6B can move relative to the first part 6A between a first and second position. The second part 6B can move from the first positon towards the second position in the direction of the closing member 8 under the influence of fluid pressure in the enclosing member 6. The force F1 as discussed above may be reached if the second part 6B is in the first position with a fluid pressure P1. The force F2 as discussed above may be reached if the second part 6B is moved towards the second position under the influence of the fluid pressure P2 in the enclosing member 6.

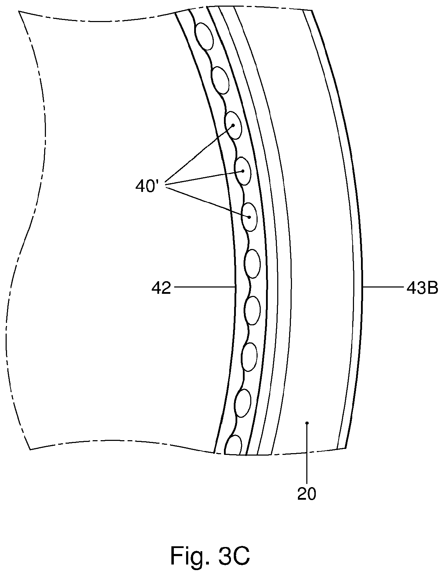

As a result of the force applied the sealing member 28 of the capsule according to the invention undergoes a plastic deformation and closely conforms to the grooves 40 of the free contact end 30 and thus provides a fluid sealing contact between the enclosing member 6 and the capsule 3 at a relatively low fluid pressure during start up of brewing but also provides a fluid sealing contact at the much higher fluid pressure in the enclosing member outside the capsule during brewing. This close conformation to the grooves 40 of the enclosing member is indicated in Figure 3C which shows the capsule 2 use, and which clearly indicates that the outwardly extending flange 20 comprises deformations 40' which conform to the grooves 40 of the enclosing member.

Now exemplary embodiments of a sealing member 28 at the outwardly extending flange 20 of the capsule 2 will be described in more detail with regard to Fig. 4.

Fig. 4A shows a first embodiment of a sealing member 28 forming an additional bearing at the outwardly extending flange 20 of a capsule 2. The sealing member and the remainder of the capsule body are made of the same plate material. The sealing member 28 comprises two spaced projections 50 and 51, each projecting axially from a base portion of the outwardly extending flange 20, to which base portion the cover 14 is attached, in a direction away from the cover 14. A plateau 52 is present between the two projections 50 and 51. The distance between the two projections 50 and 51 is such that the free contact end of the annular element 6 is squeezed between converging surfaces of the two projections 50 and 51 if the capsule is positioned in the enclosing member of the beverage preparation device and the enclosing member is closed by means of a closing member of the beverage preparation device. In the embodiment shown in Figure 4A the plateau is positioned at a distance above the portion of the outwardly extending flange 20 between the sealing member 28 and the curled edge 43 and is substantially flat. The distance between the two projections 50 and 51 is further such that the free contact end of the annular element is contacted by the two projections 50 and 51 if the capsule is positioned in the enclosing member of the beverage preparation device and the enclosing member is closed by means of a closing member of the beverage preparation device. Further, the two spaced projections 50, 51 and the plateau 52 are arranged such that the free contact end of the annular element is contacted by the plateau if the capsule is positioned in the enclosing member of the beverage preparation device and the enclosing member is closed by means of a closing member of the beverage preparation device. As can be seen in Figure 4A each projection 50, 51 comprises a projection side wall which is inclined with regard to the outwardly extending flange 20 of the aluminum capsule body. The projection side wall is configured such that it is deformed easily if the capsule is positioned in the enclosing member of the beverage preparation device and the enclosing member is closed by means of a closing member of the beverage preparation device.

Fig. 4B shows a second embodiment of a sealing member 28 at the outwardly extending flange 20 of a capsule. When compared with Figure 4A the following differences are noted. Each projection 50, 51 now comprises a projection side wall which is transverse with regard to the outwardly extending flange 20 of the aluminum capsule body. Further, in this second embodiment the plateau 52 is curved, preferably conforming to the shape of the free contact end of the annular element 6.

Fig. 4C shows a third embodiment of a sealing member 28 at the outwardly extending flange 20 of a capsule, which together with the side wall 16 of the aluminum capsule body forms an additional bearing for the enclosing member. The shown sealing member 28 comprises a projection 53 projecting from the outwardly extending flange 20 and an inclined, substantially flat plateau 52 between a rounded topmost end portion of the projection 53 and the side wall 16 of the aluminum capsule body. In this embodiment the bearing is formed by the projection 53, the plateau 52 and the side wall 16 of the aluminum capsule body. The distance between the top of the projection 53 and the side wall 16 is such that the free contact end of the annular element 6 is enclosed by the projection 53 and the side wall 16 of the aluminum capsule body if the capsule is positioned in the enclosing member of the beverage preparation device and the enclosing member is closed by means of a closing member of the beverage preparation device. In particular the distance between the projection 53 and the side wall 16 of the aluminum capsule body is such that the free contact end of the annular element 6 is contacted by the projection 53 and the side wall 16 and in the shown embodiment also the plateau 52 of the aluminum capsule body if the capsule is positioned in the enclosing member of the beverage preparation device and the enclosing member is closed by means of a closing member of the beverage preparation device.

Fig. 4D shows a fourth embodiment of a sealing member 28 at the outwardly extending flange 20 of a capsule, which together with the side wall 16 of the aluminum capsule body forms an additional bearing for the enclosing member. When compared with Figure 4C the following differences are noted. In this fourth embodiment the plateau 52 is curved, and comprises a curved portion and also a flat portion which is situated at the same level as the portion of the outwardly extending flange 20 between the projection 53 and the curved edge 43. The curved portion preferably conforms to the shape of the free contact end of the annular element 6. Fig. 4E shows a fifth embodiment of a sealing member 28 at the outwardly extending flange 20 of a capsule, which together with the side wall 16 of the aluminum capsule body forms a bearing for the enclosing member. When compared with Figure 4D the following difference is noted. In this fifth embodiment the flat portion of the plateau 52 is situated at a distance above the portion of the outwardly extending flange 20 between the projection 53 and the curved edge 43. The distance between 2 the projection 53 is preferably 0.9-1.25 mm, which allows the free end of the closing member of widely used and commercially available beverage preparation devices (such as the Citiz, Lattisima, U, Maestria, Pixie, Inissia and Essenza) to be reliably squeezed against the projections 53 with the side wall 16 in close proximity thereto..

In the embodiments shown in Figures 4C to 4E the projection 53 comprises an outer projection side wall 54 which is transverse to the portion of the outwardly extending flange between the projection 53 and the curled edge 43, but in other embodiments this outer projection side wall 54 can be inclined with regard to the portion of the outwardly extending flange 20.

In all the embodiments shown in Figures 4A to 4E each of the projections comprises a projection top constituting a portion of the projection, for instance a half, a third or a quarter of the projection, that is axially most distal from the base portion of the flange 28 to which the cover 14 is attached. At least one projection but preferably all projections forming the additional bearing is/are configured such that its projection top exerts a radial force on the free contact end of the annular element 6 if the capsule is positioned in the enclosing member of the beverage preparation device and the enclosing member is closed by means of a closing member of the beverage preparation device.

Fig. 4F shows a sixth embodiment of a seal member 28 at the outwardly extending flange 20 of a capsule. When compared with e.g. Figure 4B the following differences are noted. In this sixth embodiment the plateau 52 is V-shaped, with the bottom of the V-shaped being at the same level as the base portion of the outwardly extending flange 20 between the outer projection 51 and the curled edge 43. In this manner no bearing for the free contact end of the annular member 6 is formed, but the projection top of the inner projection 50 exerts a radial force direct outwardly on the free contact end of the annular element 6 and the projection top of the outer projection 51 exerts a radial force direct inwardly on the free contact end of the annular element 6 if the capsule is positioned in the enclosing member of the beverage preparation device and the enclosing member is closed by means of a closing member of the beverage preparation device. In this manner the free contact end is squeezed by the sealing member 28 thereby providing a satisfactory seal.

In capsules in which the sealing structure 28 has projections 50, 51 and a plateau or through 52 in between, as by way of example shown in Figs. 4A, 4B, and 4F, the center of the plateau or through 52, which extends circumferentially around the center axis of the capsule, preferably has a diameter of 29-33 mm, more preferably 30.0-31.4 mm and most preferably 30.3-31.0 mm, so that (seen in radial cross-section) the free end of the closing member of widely used and commercially available beverage preparation devices (such as the Citiz, Lattisima, U, Maestria, Pixie, Inissia and Essenza) lands accurately centered between the projections 50, 51 and the squeezing effect is evenly distributed over the inner and outer projections 50, 51. For effective squeezing in such apparatuses, the distance between projections 50, 51 is preferably 0.9-1.25 mm.

Fig. 4G shows a seventh embodiment of a seal member 28 at the outwardly extending flange 20 of a capsule according to the invention. As also shown in Fig. 2, the enclosing member 6 of the beverage preparation device has an annular element 41 having a free contact end 30 with a plurality of radially extending open grooves 40 of which some are shown in Fig. 4G.

As in the examples shown in Figs. 4A, 4B and 4F, the sealing member 28 has two spaced projections 50 and 51, each projecting axially from a base portion 23 of the outwardly extending flange 20, to which base portions 21, 23 the cover 14 is attached, in a direction away from the cover 14. As in the example shown in Fig. 4F, a plateau 52 having a rounded bottom is located between the two projections 50 and 51.

A difference compared with the examples shown in Figs. 4A, 4B and 4F is that, in the example shown in Fig. 4G, a first one of the two projections 51 projects further from a base portion 23 of the outwardly extending flange 20 than a second one of the two projections 50.

Another difference is that a bottom 56 of an annular through 55 between the inner projection 51 and the side wall 16 is axially spaced from the base portion 23 to which base portion the cover is attached. Preferably, the axial distance from the bottom 56 to the cover is smaller than the axial distance from the plateau 52 to the cover.

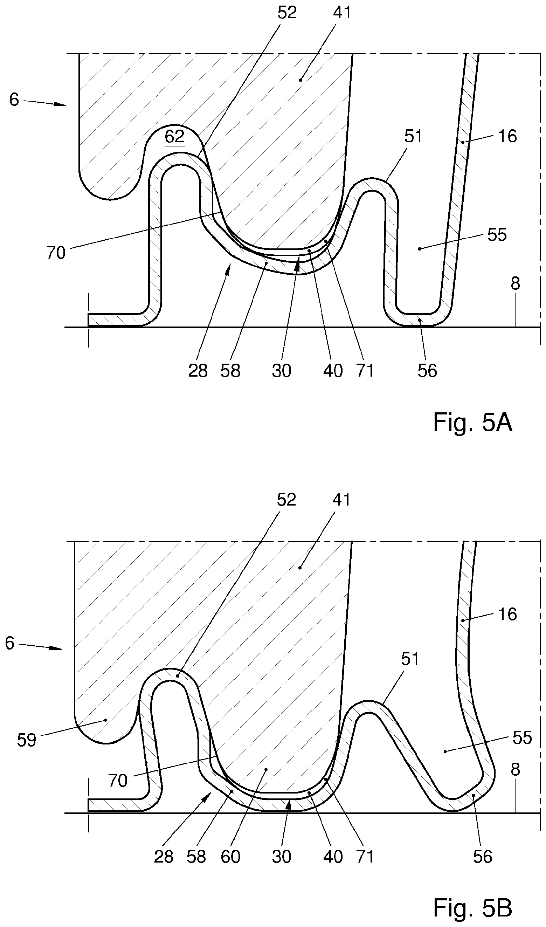

When the enclosing member 6 and/or the closing member 8 is moved towards the other with the sealing member 28 of the capsule in between, the free contact end 30 of the annular element 41 may first contact the first one of the two projections 51 and subsequently contacts the second one of the two projections (Fig. 5A).

If and when the free contact end 30 of the annular element 41 contacts the inner one of the two projections 51, the capsule is centered relative to the enclosing member 6. Moreover, if the inner one of the two projections 51 is radially too far to the outside, for instance locally due to non-circularity or off-centered positioning of the capsule, or generally due to the free contact area having a relatively small diameter, the free contact end urges the inner one of the two projections 51 radially inwardly. The outer one of the two projections is thereby entrained inwardly, so that a reliable firm sealing pressure is exerted onto the outer one of the two projections 50 in spite of the relatively small deformability of that outer projection 51 due to its smaller height. The relatively large stiffness of the outer one of the two projections 50, allows a large contact force to be exerted as it is deformed (Fig. 5B), the relatively high counter pressure provides a particularly reliable seal with high pressure resistance. Also, the outer one of the two projections 50 is then urged outwardly, which load is counteracted by hoop stress in the outer one of the two projections, which is evenly distributed circumferentially so that an evenly distributed sealing pressure is achieved.

As can also be seen from Fig. 5a, the free contact end 30 of the annular element 41 has an inner circumferential surface portion 71 contacting the inner projection 51 and an outer circumferential surface portion 70 contacting the outer projection 50. The radially extending open grooves 40 are deeper in the inner surface portion 71 than in the outer surface portion 70 or the grooves may be absent in the outer surface portion 70. Thus, the smaller, relatively stiff outer projection 50 is firmly and accurately pressed against the relatively smooth outer surface portion 70 of the free contact end 30.

The distance between the two projections 50 and 51 is such that ultimately (Figs. 5A and 5B) the free contact end 30 of the annular element 41 is squeezed between converging surfaces of the two projections 50 and 51 when the enclosing member is fully closed by means of the closing member.

The plateau 52 is axially spaced from the cover 14. As illustrated by Fig. 5B, this allows the plateau 52 between the projections 50, 51 to be displaced in the direction of relative movement of the free end 30 of the annular element 41 as the enclosing member 6 is closed, urging the projections 50, 51 to be tilted and roll off inwardly against the free end 30 of the annular element 41 as the enclosing member 6 is closed. This increases the radial sealing pressure that is exerted (in addition to the axial closing pressure), so that an increased sealing pressure is available for providing a satisfactory seal.

More specifically, three stages may be distinguished if the sealing member of the rim according to Figs. 4G, 5A, 5B and 6 is clamped between the annular element 41 of the enclosing member 6 and the closing member 8.

In the first stage contact between the annular element 41 and the sealing member 28 is established, where necessary under guidance of the inner projection 51 as described above and an initial seal is created between a generally inwardly facing surface portion of the outer projection 50 and an outer surface portion 70 of the free end 30 of the annular element 41. The radial location of this inwardly facing surface portion of the outer projection 50 and the local radius of curvature of the outer projection 50 is arranged to ensure that the faces contacting each other are oriented almost vertically. This allows a very strong wedging effect to be achieved, so that a very small vertical closing force results in very large horizontal contact pressures. These large horizontal forces are exerted with little deformation of the outer projection 50, because the reaction forces generated by the surface contact are contained mainly by hoop stress inn the outer projection 50. Also, such hoop stresses are largely independent of the remainder of the sealing member 28, so that high stiffness for exerting a large sealing force can be combined with flexibility to accommodate to tolerances and misplacement of the capsule.

Because the bottom 56 of the annular through, and accordingly the inner foot of the inner projection stands off from the cover friction and stiffness in the lateral directions are reduced and the sealing member 28 has a high degree of flexibility to accommodate misalignment and tolerance effects without undue distortion of the sealing faces. This also contributes to maintain the almost vertical orientations of the contacting faces even if misalignment and tolerances are accommodated to by lateral displacement of the contacting face of the sealing member 28.

In the second stage, the closure and further compression of the brew chamber onto the sealing ring is supported by the build-up of hydraulic pressure. As the compressive force builds, the bottom 56 of the annular trough 55 is pushed downwards by the mechanical and hydraulic loading and the whole sealing member pivots about an outer lower end 57 of the outer projection 50 until the bottom 56 of the annular through 55 touches the cover (Fig. 5B). This pivoting movement results in both a 'rigid body' type motion of the sealing member 28 as well as deformation of the sealing member shape, both factors result in addition contact pressure being transferred to the primary sealing face. Since much of the deformation occurs plastically, the contact region conforms effectively to sealing area and allows some misalignment and manufacturing tolerances to be accommodated.

In the third stage, a further increase of the axial (here vertical) force causes further deformation of the sealing member 28 (Fig. 5B). In the present embodiment a reliably very leak-tight seal at a high pressure drop at high contact pressure is obtained by deformation of a sloping section 58 forming a transition from the outer projection 50 to the plateau, which section 58 constitutes a relatively straight section between more curved sections of the plateau 52 and the outer projection 50. Such deformation results in a particularly high contact pressure along a narrow line between the sealing member 28 and the outer surface portion 70 of the free end 30 of the annular element 41.

For obtaining an effective sealing, it is further advantageous that the outer projection 50 is wedged and thereby deformed between outer and inner ridges 59, 60 of the annular element 41.

As is shown in Fig. 5B, the inner projection 51 is bent open as the sealing member 8 is deformed, so that pulling away of sealing member material towards the bottom 56 of the annular member 55 and associated contact pressure relief is counteracted.

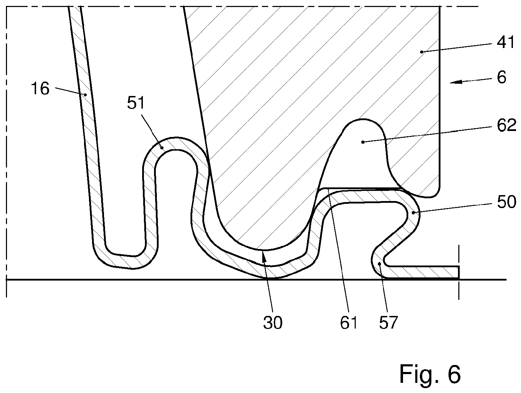

In particular in connection with the final mutual displacement of the annular element 41 and the sealing member 28, a particular issue is that most annular elements have one or more bridges 61 (Fig. 6) between outer and inner ridges 59, 60 of the annular element 41. Such bridges 61 constitute an interruption of an annular head space 62 into which the outer projection 50 is wedged during the third stage. Leakage in particular at the transitions where, in circumferential sense, the bridge begins and ends is diminished since the outer projection is shaped to roll and buckle radially outwards, so that excess sealing member material is locally displaced away from the seal between the outer projection 50 and the annular element 41, thereby reducing interference with this seal and allowing a substantially continuous seal along a line passing underneath the bridge 61.

In the foregoing specification, the invention has been described with reference to specific examples of embodiments of the invention. It will, however, be evident that various modifications and changes may be made therein without departing from the broader scope of the invention as set forth in the appended claims.

## Claims

1. Capsule containing a substance for the preparation of a potable beverage by extracting and/or dissolving the substance by means of supplying a fluid under pressure into the capsule, wherein the capsule comprises an aluminum capsule body having a central capsule body axis, said aluminum capsule body being provided with a bottom, a side wall and an outwardly extending flange, the capsule further comprising an aluminum cover attached to the outwardly extending flange, the cover hermetically closing the capsule, wherein the capsule further comprises a sealing member at the outwardly extending flange for providing a fluid sealing contact with an enclosing member of a beverage preparation device if the capsule is positioned in the enclosing member of the beverage preparation device and the enclosing member is closed by means of a closing member of the beverage preparation device, such as an extraction plate of the beverage preparation device, such that the outwardly extending flange of the capsule and at least a portion of the sealing member of the capsule are sealingly engaged between the enclosing member and the closing member of the beverage preparation device, wherein the enclosing member of the beverage preparation device comprises an annular element having a central annular element axis and a free contact end, said free contact end of the annular element optionally being provided with a plurality of radially extending open grooves, the sealing member is integral with the outwardly extending flange and comprises at least one projection projecting from the outwardly extending flange, said at least one projection comprising a projection top, and wherein the at least one projection is configured such that its projection top exerts a radial force on the free contact end of the annular element if the capsule is positioned in the enclosing member of the beverage preparation device and the enclosing member is closed by means of the closing member of the beverage preparation device, wherein the sealing member comprises a further projection projecting from the outwardly extending flange and a plateau between said two projections, wherein the distance between the two projections is such that the free contact end of the annular element is positioned between the two projections if the capsule is positioned in the enclosing member and as the enclosing member is closed by means of the closing member, wherein the sealing member comprises an annular trough between an inner one of the projections and the side **characterized in that** the plateau is axially spaced from the cover and the annular trough has a bottom axially spaced from the base portion to which base portion the cover is attached, wherein the bottom of the annular through is at a first axial distance from the cover and the plateau is at a second axial distance from the cover, said second axial distance being larger than said first axial distance, and wherein the sealing structure and the remainder of the capsule body are made of the same material.

2. Capsule according to claim 1, wherein a first one of the two projections projects further from a base portion of the outwardly extending flange, to which base portion the cover is attached, than a second one of the two projections.

3. Capsule according to claim 2, wherein the first one of the two projections is a radially inner one of the two projections.

4. Capsule according to any one of the preceding claims, wherein the sealing member is deformable such that, in use, closure of the enclosing member deforms the side wall to cause the bottom of the annular trough to be brought substantially in contact with the cover.

5. Capsule according to any one of the preceding claims, wherein the inner one of said two projections is shaped such that it is bent open if the sealing member is deformed such that the plateau contacts the cover.

6. Capsule according to any one of the claims 1-5, wherein a radially outer one of said two projections has a greater stiffness against radial outward deformation than the inner one of said two projections,

7. Capsule according to any of the claims 1-6, wherein a first one of the two projections has an extreme top end extending around the capsule axis at a diameter of 29.2 to 29.8 mm and wherein a second one of the two projections has an extreme top end extending around the capsule axis at a diameter of 31.9 to 32.4 mm.

8. Capsule according to any of the claims claim 1-7, wherein an outer one of said two projections has a generally inwardly facing surface portion extending at an enclosed angle of less than 8° and preferably less than 6° or less than 4° to the capsule body axis.

9. Capsule according to any of the claims 1-8, wherein the distance between the two projections is such that the free contact end of the annular element is contacted by the two projections if the capsule is positioned in the enclosing member and the enclosing member is closed by means of the closing member.

10. Capsule according to any of the claims 1-9, wherein the two spaced projections and the plateau are arranged such that the free contact end of the annular element is contacted by the plateau if the capsule is positioned in the enclosing member and the enclosing member is closed by means of the closing member.

11. Capsule according to any of the claims 1-10, wherein the capsule comprises a bearing for the enclosing member if the capsule is positioned in the enclosing member and the enclosing member is closed by means of the closing member, said bearing enclosing at least a portion of the free contact end of the annular element and said bearing being formed by the two projections and the plateau there between.

12. Capsule according to any one of the claims 1-11, wherein, seen in cross-section along a plane through the capsule body axis, the plateau has a sloping section forming a transition to the outer one of said two projection, wherein the sloping section constitutes a relatively straight section between more curved sections.

13. Capsule according to claim 12, wherein the sloping section is oriented at an enclosed angle of at least 10° and more preferably at least 20° and at most and 60° and more preferably at most 50° relative to the cover.

14. Capsule according to claim any of the claims 1-11, wherein the plateau is substantially flat.

15. Capsule according to any one of the claims 1-11, wherein the plateau comprises a curved portion, the plateau preferably being V-shaped.

16. Capsule according to any of the claims 1-15, wherein an outer one of said two projections is shaped to roll and buckle radially outwards if compressed in axial direction, while in contact with an outwardly facing surface of a free end of the annular element positioned between the two projections.

17. Capsule according to any of the claims 1-16, wherein a transition from the outer one of said two projections to a radially outwardly projecting flange of the a base portion to which the cover is attached has an internal radius of less than 0.15 mm and preferably less than 0.12 mm, a radially outer wall of said outer one of said two projections being oriented at an enclosed angle relative to the capsule body axis of less than 8° and more preferably less than 6°.

18. Capsule according to any one of the preceding claims, wherein the at least one projection comprises a projection side wall which is inclined with regard to the outwardly extending flange of the aluminum capsule body, said projection side wall being configured such that it is deformed easily if the capsule is positioned in the enclosing member of the beverage preparation device and the enclosing member is closed by means of the closing member of the beverage preparation device.

19. System for preparing a potable beverage from a capsule using a fluid supplied under pressure into the capsule comprising:
a beverage preparation device comprising an enclosing member for receiving the capsule, wherein the enclosing member comprises fluid injection means for supplying fluid under pressure into the capsule, wherein the beverage preparation device further comprises a closing member, such as an extraction plate, for closing the enclosing member of the beverage preparation device, wherein the enclosing member of the beverage preparation device further comprises an annular element having a central annular element axis and a free contact end, said free contact end of the annular element optionally being provided with a plurality of radially extending open grooves; and
a capsule according to any of the preceding claims.

20. System according to claim 19, wherein said free contact end of the annular element has a first circumferential surface portion contacting said first projection, if the capsule is positioned in the enclosing member and as the enclosing member is closed by means of the closing member, and a second circumferential surface portion contacting said second projection, if the capsule is positioned in the enclosing member and as the enclosing member is closed by means of the closing member, wherein said radially extending open grooves are deeper in said first surface portion than in said second surface portion or said radially extending open grooves are absent in said second surface portion.

21. System according to claim 19 or 20, wherein the capsule is a capsule according to any of the claims 2-18 and wherein the enclosing member and the projections are arranged such that, when the enclosing member and/or the closing member is moved towards the other with the sealing member in-between, the free contact end of the annular element may first contact the first one of the two projections and subsequently contacts the second one of the two projections.

22. System according to claim 19-21, wherein the capsule is a capsule according to claim 14 or 15, and wherein the annular element is arranged for deformation of the sloping section.

23. System according to any of the claims 19-22, wherein the annular element has outer and inner ridges and wherein the outer one of said two projections is arranged to be deformed between said outer and inner ridges if the sealing member is clamped between the enclosing member and the closing member.

24. Use of a capsule according to any one of the claims 1 to 18 in a beverage preparation device comprising an enclosing member for receiving the capsule, wherein the enclosing member comprises fluid injection means for supplying fluid under pressure into the capsule, wherein the beverage preparation device further comprises a closing member, such as an extraction plate, for closing the enclosing member of the beverage preparation device, wherein the enclosing member of the beverage preparation device further comprises an annular element having a central annular element axis and a free contact end, said free contact end of the annular element optionally being provided with a plurality of radial grooves; wherein the capsule contains a substance for the preparation of a potable beverage by extracting and/or dissolving the substance by means of the fluid supplied under pressure into the capsule by the fluid injection means of the beverage preparation device, wherein the capsule comprises an aluminum capsule body having a central capsule body axis, said aluminum capsule body being provided with a bottom, a side wall and an outwardly extending flange, the capsule further comprising an aluminum cover attached to the outwardly extending flange, the cover hermetically closing the capsule, wherein the capsule further comprises a sealing member integral with the outwardly extending flange for providing a fluid sealing contact with the enclosing member of the beverage preparation device if the capsule is positioned in the enclosing member of the beverage preparation device and the enclosing member is closed by means of the closing, such that the outwardly extending flange of the capsule and at least a portion of the sealing member of the capsule are sealingly engaged between the enclosing member and the closing member of the beverage preparation device.

25. Use according to claim 24, wherein the capsule is a capsule according to any of the claims 1-17, and wherein, when the enclosing member and/or the closing member is moved towards the other with the sealing member of the capsule in between, the free contact end of the annular element may first contact the first one of the two projections and subsequently contacts the second one of the two projections.

26. Use according to claims 24 or 25, wherein the capsule is a capsule according to any of the claims 1-17, wherein the annular element urges an outer one of the two projections outwardly.

27. Use according to any of the claims 24-26, wherein the capsule is a capsule according to any of the claims 1-17, and wherein the plateau is axially spaced from the cover and the plateau between the projections is displaced by the annular element as the enclosing member is closed, urging the projections to be tilted and roll off inwardly against the free end of the annular element.

28. Use according to any of the claims 24-27, wherein the capsule is a capsule according to any of the claims 1-5 and wherein the bottom of the annular trough is pushed against the cover by the annular element.

29. Use according to any of the claims 24-28, wherein the capsule is a capsule according to claim 16 or 17, and wherein the annular element has one or more bridges between outer and inner ridges, the or each bridge constituting an interruption of an annular space between the outer and inner ridges, and wherein the outer one of said two projections rolls and buckles radially outwards where it is compressed by the bridge.

## Patentansprüche

1. Kapsel, die eine Substanz zum Zubereiten eines trinkbaren Getränks durch Extrahieren und/oder Lösen der Substanz mittels Zuführen eines Fluids unter Druck in die Kapsel enthält, wobei die Kapsel einen Aluminiumkapselkörper mit einer zentralen Kapselkörperachse umfasst, wobei der Aluminiumkapselkörper mit einem Boden, einer Seitenwand und einem sich nach außen erstreckenden Flansch bereitgestellt ist, wobei die Kapsel ferner eine Aluminiumabdeckung umfasst, die an dem sich nach außen erstreckenden Flansch befestigt ist, die Abdeckung die Kapsel luftdicht schließt, die Kapsel ferner ein Dichtungselement an dem sich nach außen erstreckenden Flansch zum Bereitstellen eines Fluiddichtungskontakts mit einem umschließenden Element einer Getränkezubereitungsvorrichtung umfasst, wenn die Kapsel in dem umschließenden Element der Getränkezubereitungsvorrichtung positioniert ist, und das umschließende Element mittels eines Schließelements der Getränkezubereitungsvorrichtung, wie einer Extraktionsplatte der Getränkezubereitungsvorrichtung, geschlossen wird, sodass der sich nach außen erstreckende Flansch der Kapsel und mindestens ein Abschnitt des Dichtungselements der Kapsel abdichtend zwischen dem umschließenden Element und dem Schließelement der Getränkezubereitungsvorrichtung eingreifen, wobei das umschließende Element der Getränkezubereitungsvorrichtung ein ringförmiges Element mit einer zentralen Achse des ringförmigen Elements und einem freien Kontaktende umfasst, wobei das freie Kontaktende des ringförmigen Elements wahlweise mit einer Vielzahl von radial verlaufenden offenen Nuten bereitgestellt ist, das Dichtungselement mit dem sich nach außen erstreckenden Flansch einstückig ist und mindestens einen Vorsprung umfasst, der aus dem sich nach außen erstreckenden Flansch hervorsteht, wobei der mindestens eine Vorsprung eine Vorsprungsoberseite umfasst und wobei der mindestens eine Vorsprung so konfiguriert ist, dass seine Vorsprungsoberseite eine Radialkraft auf das freie Kontaktende des ringförmigen Elements ausübt, wenn die Kapsel in dem umschließenden Element der Getränkezubereitungsvorrichtung positioniert ist und das umschließende Element mittels des Schließelements der Getränkezubereitungsvorrichtung geschlossen wird, wobei das Dichtungselement einen weiteren Vorsprung umfasst, der aus dem sich nach außen erstreckenden Flansch und einem Plateau zwischen den beiden Vorsprüngen hervorsteht, wobei der Abstand zwischen den beiden Vorsprüngen derart ist, dass das freie Kontaktende des ringförmigen Elements zwischen den beiden Vorsprüngen eingeschlossen ist, wenn die Kapsel in dem umschließenden Element positioniert ist und das umschließende Element mittels des Schließelements geschlossen wird, wobei das Dichtungselement eine ringförmige Mulde zwischen einem inneren der Vorsprünge und der Seite umfasst, **dadurch gekennzeichnet, dass** das Plateau axial von der Abdeckung beabstandet ist und die ringförmige Mulde einen Boden aufweist, der axial von dem Basisabschnitt beabstandet ist, an dem die Abdeckung befestigt ist, wobei der Boden der ringförmigen Mulde einen ersten axialen Abstand von der Abdeckung und das Plateau einen zweiten axialen Abstand von der Abdeckung hat, wobei der zweite axiale Abstand größer als der erste axiale Abstand ist, und wobei die Dichtungsstruktur und der übrige Kapselkörper aus dem gleichen Material hergestellt sind.

2. Kapsel nach Anspruch 1, wobei ein erster der beiden Vorsprünge weiter von einem Basisabschnitt des sich nach außen erstreckenden Flansches, an dem die Abdeckung befestigt ist, vorsteht als ein zweiter der beiden Vorsprünge.

3. Kapsel nach Anspruch 2, wobei es sich bei dem ersten der beiden Vorsprünge um einen radial inneren der beiden Vorsprünge handelt.

4. Kapsel nach einem der vorstehenden Ansprüche, wobei das Dichtungselement verformbar ist, sodass bei Verwendung das Schließen des umschließenden Elements die Seitenwand so verformt, dass der Boden der ringförmigen Mulde im Wesentlichen in Kontakt mit der Abdeckung gebracht wird.

5. Kapsel nach einem der vorstehenden Ansprüche, wobei der innere der beiden Vorsprünge so geformt ist, dass er sich aufbiegt, wenn das Dichtelement so verformt wird, dass das Plateau die Abdeckung berührt.

6. Kapsel nach einem der Ansprüche 1 bis 5, wobei ein radial äußerer der beiden Vorsprünge eine größere Steifigkeit gegen nach außen gerichtete radiale Verformung als der innere der beiden Vorsprünge aufweist,

7. Kapsel nach einem der Ansprüche 1 bis 6, wobei ein erster der beiden Vorsprünge ein äußerstes, um die Kapselachse verlaufendes oberes Ende mit einem Durchmesser von 29,2 bis 29,8 mm aufweist, und wobei ein zweiter der beiden Vorsprünge ein äußerstes, um die Kapselachse verlaufendes oberes Ende mit einem Durchmesser von 31,9 bis 32,4 mm aufweist.

8. Kapsel nach einem der Ansprüche 1 bis 7, wobei ein äußerer der beiden Vorsprünge einen allgemein nach innen gerichteten Oberflächenabschnitt aufweist, der sich mit einem eingeschlossenen Winkel von weniger als 8 ° und vorzugsweise weniger als 6 ° oder weniger als 4 ° zu der Kapselkörperachse erstreckt.

9. Kapsel nach einem der Ansprüche 1 bis 8, wobei der Abstand zwischen den beiden Vorsprüngen derart ist, dass das freie Kontaktende des ringförmigen Elements von den beiden Vorsprüngen berührt wird, wenn die Kapsel in dem umschließenden Element positioniert ist und das umschließende Element mittels des Schließelements geschlossen wird.

10. Kapsel nach einem der Ansprüche 1 bis 9, wobei die beiden beabstandeten Vorsprünge und das Plateau so angeordnet sind, dass das freie Kontaktende des ringförmigen Elements von dem Plateau berührt wird, wenn die Kapsel in dem umschließenden Element positioniert ist und das umschließende Element mittels des Schließelements geschlossen wird.

11. Kapsel nach einem der Ansprüche 1 bis 10, wobei die Kapsel ein Lager für das umschließende Element umfasst, wenn die Kapsel in dem umschließenden Element positioniert ist und das umschließende Element mittels des Schließelements geschlossen wird, wobei das Lager mindestens einen Abschnitt des freien Kontaktendes des ringförmigen Elements umschließt und das Lager durch die beiden Vorsprünge und das Plateau dazwischen gebildet wird.

12. Kapsel nach einem der Ansprüche 1 bis 11, wobei das Plateau, im Querschnitt entlang einer Ebene durch die Kapselkörperachse gesehen, einen geneigten Abschnitt aufweist, der einen Übergang zu dem äußeren der beiden Vorsprünge bildet, wobei der geneigte Abschnitt einen relativ geraden Abschnitt zwischen mehr gebogenen Abschnitten bildet.

13. Kapsel nach Anspruch 12, wobei der geneigte Abschnitt mit einem eingeschlossenen Winkel von mindestens 10 ° und mehr bevorzugt mindestens 20 ° und höchstens 60 ° und mehr bevorzugt höchstens 50 ° relativ zu der Abdeckung ausgerichtet ist.

14. Kapsel nach einem der Ansprüche 1 bis 11, wobei das Plateau im Wesentlichen flach ist.

15. Kapsel nach einem der Ansprüche 1 bis 11, wobei das Plateau einen gebogenen Abschnitt umfasst, wobei das Plateau vorzugsweise V-förmig ist.

16. Kapsel nach einem der Ansprüche 1 bis 15, wobei ein äußerer der beiden Vorsprünge so geformt ist, dass er radial nach außen rollt und nachgibt, wenn er in axialer Richtung zusammengedrückt wird, während er mit einer nach außen gerichteten Oberfläche eines freien Endes des ringförmigen Elements, das zwischen den beiden Vorsprüngen positioniert ist, in Kontakt ist.

17. Kapsel nach einem der Ansprüche 1 bis 16, wobei ein Übergang von dem äußeren der beiden Vorsprünge zu einem radial nach außen vorstehenden Flansch des Basisabschnitts, an dem die Abdeckung befestigt ist, einen Innenradius von weniger als 0,15 mm und vorzugsweise von weniger als 0,12 mm aufweist, wobei eine radial äußere Wand des äußeren der beiden Vorsprünge in einem eingeschlossenen Winkel von weniger als 8 ° und mehr bevorzugt von weniger als 6 ° relativ zu der Kapselkörperachse ausgerichtet ist.

18. Kapsel nach einem der vorstehenden Ansprüche, wobei der mindestens eine Vorsprung eine Vorsprungsseitenwand umfasst, die in Bezug zu dem sich nach außen erstreckenden Flansch des Aluminiumkapselkörpers geneigt ist, wobei die Vorsprungsseitenwand so konfiguriert ist, dass sie sich leicht verformt, wenn die Kapsel in dem umschließenden Element der Getränkezubereitungsvorrichtung positioniert ist und das umschließende Element mittels eines Schließelements der Getränkezubereitungsvorrichtung geschlossen wird.

19. System zum Zubereiten eines trinkbaren Getränks aus einer Kapsel unter Verwendung eines unter Druck in die Kapsel zugeführten Fluids, umfassend:
eine Getränkezubereitungsvorrichtung, umfassend ein umschließendes Element zur Aufnahme der Kapsel, wobei das umschließende Element ein Flüssigkeitseinspritzmittel zum Zuführen von unter Druck stehendem Fluid in die Kapsel umfasst, wobei die Getränkezubereitungsvorrichtung ferner ein Schließelement, wie eine Extraktionsplatte, zum Schließen des umschließenden Elements der Getränkezubereitungsvorrichtung umfasst, wobei das umschließende Element der Getränkezubereitungsvorrichtung ferner ein ringförmiges Element mit einer zentralen ringförmigen Elementachse und einem freien Kontaktende umfasst, wobei das freie Kontaktende des ringförmigen Elements wahlweise mit einer Vielzahl von radial verlaufenden offenen Nuten bereitgestellt ist; und
eine Kapsel nach einem der vorstehenden Ansprüche.

20. System nach Anspruch 19, wobei das freie Kontaktende des ringförmigen Elements einen ersten Umfangsoberflächenabschnitt aufweist, der den ersten Vorsprung berührt, wenn die Kapsel in dem umschließenden Element positioniert ist und das umschließende Element mittels des Schließelements geschlossen wird, und einen zweiten Umfangsoberflächenabschnitt, der den zweiten Vorsprung berührt, wenn die Kapsel in dem umschließenden Element positioniert ist und das umschließende Element mittels des Schließelements geschlossen wird, wobei die radial verlaufenden offenen Nuten in dem ersten Oberflächenabschnitt tiefer als in dem zweiten Oberflächenabschnitt sind oder die radial verlaufenden offenen Nuten in dem zweiten Oberflächenabschnitt fehlen.

21. System nach Anspruch 19 oder 20, wobei die Kapsel eine Kapsel nach einem der Ansprüche 2 bis 18 ist und wobei das umschließende Element und die Vorsprünge so angeordnet sind, dass, wenn das umschließende Element und/oder das Schließelement, zwischen denen sich das Dichtungselement befindet, auf das andere zu bewegt wird, das freie Kontaktende des ringförmigen Elements erst den ersten der beiden Vorsprünge und anschließend den zweiten der beiden Vorsprünge berühren kann.

22. System nach einem der Ansprüche 19 bis 21, wobei die Kapsel eine Kapsel nach Anspruch 14 oder 15 ist und wobei das ringförmige Element zur Verformung des geneigten Abschnitts angeordnet ist.

23. System nach einem der Ansprüche 19 bis 22, wobei das ringförmige Element äußere und innere Rippen aufweist und wobei der äußere der beiden Vorsprünge so angeordnet ist, dass er zwischen den äußeren und inneren Rippen verformt wird, wenn das Dichtungselement zwischen dem umschließenden Element und dem Schließelement festgeklemmt wird.

24. Verwendung einer Kapsel nach einem der Ansprüche 1 bis 18 in einer Getränkezubereitungsvorrichtung, die ein umschließendes Element zum Aufnehmen der Kapsel umfasst, wobei das umschließende Element ein Flüssigkeitseinspritzmittel zum Zuführen von unter Druck stehendem Fluid in die Kapsel umfasst, wobei die Getränkezubereitungsvorrichtung ferner ein Schließelement, wie eine Extraktionsplatte, zum Schließen des umschließenden Elements der Getränkezubereitungsvorrichtung umfasst, wobei das umschließende Element der Getränkezubereitungsvorrichtung ferner ein ringförmiges Element mit einer zentralen ringförmigen Elementachse und einem freien Kontaktende umfasst, wobei das freie Kontaktende des ringförmigen Elements wahlweise mit einer Vielzahl radialer Nuten bereitgestellt ist; wobei die Kapsel eine Substanz zum Zubereiten eines trinkbaren Getränks durch Extrahieren und/oder Lösen der Substanz mittels der durch das Flüssigkeitseinspritzmittel der Getränkezubereitungsvorrichtung unter Druck zugeführten Flüssigkeit in die Kapsel enthält, wobei die Kapsel einen Aluminiumkapselkörper mit einer zentralen Kapselkörperachse umfasst, wobei der Aluminiumkapselkörper mit einem Boden, einer Seitenwand und einem nach außen verlaufenden Flansch bereitgestellt ist, wobei die Kapsel ferner eine Aluminiumabdeckung umfasst, die an dem nach außen verlaufenden Flansch befestigt ist, wobei die Abdeckung die Kapsel luftdicht verschließt, wobei die Kapsel ferner ein einstückig mit dem nach außen verlaufenden Flansch gebildetes Dichtungselement zum Bereitstellen eines Fluidabdichtungskontakts mit dem umschließenden Element der Getränkezubereitungsvorrichtung umfasst, wenn die Kapsel in dem umschließenden Element der Getränkezubereitungsvorrichtung positioniert ist und das umschließende Element mittels des Schließelements derart verschlossen wird, dass der nach außen verlaufende Flansch der Kapsel und mindestens ein Abschnitt des Dichtungselements der Kapsel dichtend zwischen dem umschließenden Element und dem Schließelement der Getränkezubereitungsvorrichtung in Eingriff stehen.

25. Verwendung nach Anspruch 24, wobei die Kapsel eine Kapsel nach einem der Ansprüche 1 bis 17 ist und wobei, wenn das umschließende Element und/oder das Schließelement, zwischen denen sich das Dichtungselement der Kapsel befindet, auf das andere zu bewegt wird, das freie Kontaktende des ringförmigen Elements erst den ersten der beiden Vorsprünge und anschließend den zweiten der beiden Vorsprünge berühren kann.

26. Verwendung nach einem der Ansprüche 24 oder 25, wobei die Kapsel eine Kapsel nach einem der Ansprüche 1 bis 17 ist, wobei das ringförmige Element einen äußeren der beiden Vorsprünge nach außen drückt.

27. Verwendung nach einem der Ansprüche 24 bis 26, wobei die Kapsel eine Kapsel nach einem der Ansprüche 1 bis 17 ist und wobei das Plateau axial von der Abdeckung beabstandet ist und das Plateau zwischen den Vorsprüngen durch das ringförmige Element verschoben wird, wenn das umschließende Element geschlossen wird, wodurch die Vorsprünge gekippt werden und nach innen gegen das freie Ende des ringförmigen Elements abrollen.

28. Verwendung nach einem der Ansprüche 24 bis 27, wobei die Kapsel eine Kapsel nach einem der Ansprüche 1 bis 5 ist und wobei der Boden der ringförmigen Mulde durch das ringförmige Element gegen die Abdeckung gedrückt wird.

29. Verwendung nach einem der Ansprüche 24 bis 28, wobei die Kapsel eine Kapsel nach Anspruch 16 oder 17 ist und wobei das ringförmige Element eine oder mehrere Brücken zwischen äußeren und inneren Rippen aufweist, wobei die oder jede Brücke eine Unterbrechung eines ringförmigen Raums zwischen den inneren und äußeren Rippen darstellt und wobei der äußere der beiden Vorsprünge radial nach außen abrollt und nachgibt, wo er durch die Brücke zusammengedrückt wird.

## Revendications

1. Capsule contenant une substance pour la préparation d'une boisson potable par extraction et/ou dissolution de la substance au moyen de l'alimentation d'un fluide sous pression dans la capsule, dans laquelle la capsule comprend un corps de capsule en aluminium ayant un axe central de corps de capsule, ledit corps de capsule en aluminium étant pourvu d'un fond, d'une paroi latérale et d'un rebord s'étendant vers l'extérieur, la capsule comprenant en outre un couvercle en aluminium fixé au rebord s'étendant vers l'extérieur, le couvercle fermant hermétiquement la capsule, dans laquelle la capsule comprend en outre un élément d'étanchéité au niveau du rebord s'étendant vers l'extérieur pour fournir un contact étanche aux fluides avec un élément de confinement d'un dispositif de préparation de boisson si la capsule est positionnée dans l'élément de confinement du dispositif de préparation de boisson et que l'élément de confinement est fermé au moyen d'un élément de fermeture du dispositif de préparation de boisson, tel qu'une plaque d'extraction du dispositif de préparation de boisson, de telle sorte que le rebord s'étendant vers l'extérieur de la capsule et au moins une partie de l'élément d'étanchéité de la capsule sont mis en prise de manière étanche entre l'élément de confinement et l'élément de fermeture du dispositif de préparation de boisson, dans laquelle l'élément de confinement du dispositif de préparation de boisson comprend un élément annulaire ayant un axe central d'élément annulaire et une extrémité de contact libre, ladite extrémité de contact libre de l'élément annulaire étant éventuellement pourvue d'une pluralité de rainures ouvertes s'étendant radialement, l'élément d'étanchéité est solidaire du rebord s'étendant vers l'extérieur et comprend au moins une saillie faisant saillie à partir du rebord s'étendant vers l'extérieur, ladite au moins une saillie comprenant un sommet de saillie, et dans laquelle l'au moins une saillie est configurée de telle sorte que son sommet de saillie exerce une force radiale sur l'extrémité de contact libre de l'élément annulaire si la capsule est positionnée dans l'élément de confinement du dispositif de préparation de boisson et que l'élément de confinement est fermé au moyen de l'élément de fermeture du dispositif de préparation de boisson, dans laquelle l'élément d'étanchéité comprend une saillie supplémentaire faisant saillie à partir du rebord s'étendant vers l'extérieur et un plateau entre lesdites deux saillies, dans laquelle la distance entre les deux saillies est telle que l'extrémité de contact libre de l'élément annulaire est positionnée entre les deux saillies si la capsule est positionnée dans l'élément de confinement et à mesure que l'élément de confinement est fermé au moyen de l'élément de fermeture, dans laquelle l'élément d'étanchéité comprend un creux annulaire entre une interne parmi les saillies et le côté **caractérisée en ce que** le plateau est axialement espacé du couvercle et le creux annulaire a un fond axialement espacé de la partie de base, partie de base à laquelle le couvercle est fixé, dans laquelle le fond du creux annulaire est à une première distance axiale du couvercle et le plateau est à une deuxième distance axiale du couvercle, ladite deuxième distance axiale étant plus grande que ladite première distance axiale, et dans laquelle la structure d'étanchéité et le reste du corps de capsule sont constitués du même matériau.

2. Capsule selon la revendication 1, dans laquelle une première des deux saillies fait saillie davantage à partir d'une partie de base du rebord s'étendant vers l'extérieur, partie de base à laquelle le couvercle est fixé, qu'une deuxième des deux saillies.

3. Capsule selon la revendication 2, dans laquelle la première des deux saillies est une radialement interne parmi les deux saillies.

4. Capsule selon l'une quelconque des revendications précédentes, dans laquelle l'élément d'étanchéité est déformable de telle sorte que, en cours d'utilisation, une fermeture de l'élément de confinement déforme la paroi latérale pour amener le fond du creux annulaire à être amené essentiellement en contact avec le couvercle.

5. Capsule selon l'une quelconque des revendications précédentes, dans laquelle l'interne desdites deux saillies est profilée de telle sorte qu'elle est ouverte par pliage si l'élément d'étanchéité est déformé de telle sorte que le plateau vient en contact avec le couvercle.

6. Capsule selon l'une quelconque des revendications 1 à 5, dans laquelle une radialement externe desdites deux saillies a une plus grande rigidité vis-à-vis d'une déformation radiale vers l'extérieur que l'interne desdites deux saillies,

7. Capsule selon l'une quelconque des revendications 1 à 6, dans laquelle une première des deux saillies a une extrémité supérieure extrême s'étendant autour de l'axe de capsule à un diamètre de 29,2 à 29,8 mm et dans laquelle une deuxième des deux saillies a une extrémité supérieure extrême s'étendant autour de l'axe de capsule à un diamètre de 31,9 à 32,4 mm.

8. Capsule selon l'une quelconque des revendications revendication 1 à 7, dans laquelle une externe desdites deux saillies a une partie de surface généralement tournée vers l'intérieur s'étendant selon un angle fermé inférieur à 8° et de préférence inférieur à 6° ou inférieur à 4° par rapport à l'axe de corps de capsule.

9. Capsule selon l'une quelconque des revendications 1 à 8, dans laquelle la distance entre les deux saillies est telle que l'extrémité de contact libre de l'élément annulaire est mise en contact par les deux saillies si la capsule est positionnée dans l'élément de confinement et que l'élément de confinement est fermé au moyen de l'élément de fermeture.

10. Capsule selon l'une quelconque des revendications 1 à 9, dans laquelle les deux saillies espacées et le plateau sont agencés de telle sorte que l'extrémité de contact libre de l'élément annulaire est mise en contact par le plateau si la capsule est positionnée dans l'élément de confinement et que l'élément de confinement est fermé au moyen de l'élément de fermeture.

11. Capsule selon l'une quelconque des revendications 1 à 10, dans laquelle la capsule comprend un appui pour l'élément de confinement si la capsule est positionnée dans l'élément de confinement et que l'élément de confinement est fermé au moyen de l'élément de fermeture, ledit appui enfermant au moins une partie de l'extrémité de contact libre de l'élément annulaire et ledit appui étant formé par les deux saillies et le plateau entre elles.

12. Capsule selon l'une quelconque des revendications 1 à 11, dans laquelle, observé en coupe transversale le long d'un plan à travers l'axe de corps de capsule, le plateau a une section inclinée formant une transition vers l'externe desdites deux saillies, dans laquelle la section inclinée constitue une section relativement linéaire entre des sections plus incurvées.

13. Capsule selon la revendication 12, dans laquelle la section inclinée est orientée selon un angle fermé d'au moins 10° et plus préférablement au moins 20° et au plus et 60° et plus préférablement au plus 50° par rapport au couvercle.

14. Capsule selon la revendication l'une quelconque des revendications 1 à 11, dans laquelle le plateau est essentiellement plat.

15. Capsule selon l'une quelconque des revendications 1 à 11, dans laquelle le plateau comprend une partie incurvée, le plateau étant de préférence en forme de V.

16. Capsule selon l'une quelconque des revendications 1 à 15, dans laquelle une externe desdites deux saillies est profilée pour s'enrouler et se boucler radialement vers l'extérieur si elle est comprimée en direction axiale, alors qu'elle est en contact avec une surface tournée vers l'extérieur d'une extrémité libre de l'élément annulaire positionné entre les deux saillies.

17. Capsule selon l'une quelconque des revendications 1 à 16, dans laquelle une transition depuis l'externe desdites deux saillies à un rebord faisant saillie radialement vers l'extérieur de la partie de base à laquelle le couvercle est fixé a un rayon interne inférieur à 0,15 mm et de préférence inférieur à 0,12 mm, une paroi radialement externe de ladite externe desdites deux saillies étant orientée selon un angle fermé par rapport à l'axe de corps de capsule inférieur à 8° et plus préférablement inférieur à 6°.

18. Capsule selon l'une quelconque des revendications précédentes, dans laquelle l'au moins une saillie comprend une paroi latérale de saillie qui est inclinée par rapport au rebord s'étendant vers l'extérieur du corps de capsule en aluminium, ladite paroi latérale de saillie étant configurée de telle sorte qu'elle est déformée facilement si la capsule est positionnée dans l'élément de confinement du dispositif de préparation de boisson et que l'élément de confinement est fermé au moyen de l'élément de fermeture du dispositif de préparation de boisson.

19. Système pour la préparation d'une boisson potable à partir d'une capsule en utilisant un fluide alimenté sous pression dans la capsule, comprenant :
un dispositif de préparation de boisson comprenant un élément de confinement pour recevoir la capsule, dans lequel l'élément de confinement comprend un moyen d'injection de fluide destiné à alimenter un fluide sous pression dans la capsule, dans lequel le dispositif de préparation de boisson comprend en outre un élément de fermeture, tel qu'une plaque d'extraction, pour fermer l'élément de confinement du dispositif de préparation de boisson, dans lequel l'élément de confinement du dispositif de préparation de boisson comprend en outre un élément annulaire ayant un axe central d'élément annulaire et une extrémité de contact libre, ladite extrémité de contact libre de l'élément annulaire étant éventuellement pourvue d'une pluralité de rainures ouvertes s'étendant radialement ; et
une capsule selon l'une quelconque des revendications précédentes.

20. Système selon la revendication 19, dans lequel ladite extrémité de contact libre de l'élément annulaire a une première partie de surface circonférentielle venant en contact avec ladite première saillie, si la capsule est positionnée dans l'élément de confinement et à mesure que l'élément de confinement est fermé au moyen de l'élément de fermeture, et une deuxième partie de surface circonférentielle venant en contact avec ladite deuxième saillie, si la capsule est positionnée dans l'élément de confinement et à mesure que l'élément de confinement est fermé au moyen de l'élément de fermeture, dans lequel lesdites rainures ouvertes s'étendant radialement sont plus profondes dans ladite première partie de surface que dans ladite deuxième partie de surface ou lesdites rainures ouvertes s'étendant radialement sont absentes dans ladite deuxième partie de surface.

21. Système selon la revendication 19 ou 20, dans lequel la capsule est une capsule selon l'une quelconque des revendications 2 à 18 et dans lequel l'élément de confinement et les saillies sont agencés de telle sorte que, lorsque l'élément de confinement et/ou l'élément de fermeture sont déplacés en direction de l'autre avec l'élément d'étanchéité entre eux, l'extrémité de contact libre de l'élément annulaire peut d'abord venir en contact avec la première des deux saillies et ensuite vient en contact avec la deuxième des deux saillies.

22. Système selon la revendication 19 à 21, dans lequel la capsule est une capsule selon la revendication 14 ou 15, et dans lequel l'élément annulaire est agencé pour une déformation de la section inclinée.

23. Système selon l'une quelconque des revendications 19 à 22, dans lequel l'élément annulaire a des crêtes externes et internes et dans lequel l'externe desdites deux saillies est agencée pour être déformée entre lesdites crêtes externes et internes si l'élément d'étanchéité est serré entre l'élément de confinement et l'élément de fermeture.

24. Utilisation d'une capsule selon l'une quelconque des revendications 1 à 18 dans un dispositif de préparation de boisson comprenant un élément de confinement pour recevoir la capsule, dans laquelle l'élément de confinement comprend un moyen d'injection de fluide pour alimenter un fluide sous pression dans la capsule, dans laquelle le dispositif de préparation de boisson comprend en outre un élément de fermeture, tel qu'une plaque d'extraction, pour fermer l'élément de confinement du dispositif de préparation de boisson, dans laquelle l'élément de confinement du dispositif de préparation de boisson comprend en outre un élément annulaire ayant un axe central d'élément annulaire et une extrémité de contact libre, ladite extrémité de contact libre de l'élément annulaire étant éventuellement pourvue d'une pluralité de rainures radiales ; dans laquelle la capsule contient une substance pour la préparation d'une boisson potable par extraction et/ou dissolution de la substance au moyen du fluide alimenté sous pression dans la capsule par le moyen d'injection de fluide du dispositif de préparation de boisson, dans laquelle la capsule comprend un corps de capsule en aluminium ayant un axe central de corps de capsule, ledit corps de capsule en aluminium étant pourvu d'un fond, d'une paroi latérale et d'un rebord s'étendant vers l'extérieur, la capsule comprenant en outre un couvercle en aluminium fixé au rebord s'étendant vers l'extérieur, le couvercle fermant hermétiquement la capsule, dans laquelle la capsule comprend en outre un élément solidaire du rebord s'étendant vers l'extérieur pour fournir un contact étanche aux fluides avec l'élément de confinement du dispositif de préparation de boisson si la capsule est positionnée dans l'élément de confinement du dispositif de préparation de boisson et que l'élément de confinement est fermé au moyen de la fermeture, de telle sorte que le rebord s'étendant vers l'extérieur de la capsule et au moins une partie de l'élément d'étanchéité de la capsule sont mis en prise de manière étanche entre l'élément de confinement et l'élément de fermeture du dispositif de préparation de boisson.

25. Utilisation selon la revendication 24, dans laquelle la capsule est une capsule selon l'une quelconque des revendications 1 à 17, et dans laquelle, à mesure que l'élément de confinement et/ou l'élément de fermeture sont déplacés en direction de l'autre avec l'élément d'étanchéité de la capsule entre eux, l'extrémité de contact libre de l'élément annulaire peut d'abord venir en contact avec la première des deux saillies et ensuite vient en contact avec la deuxième des deux saillies.

26. Utilisation selon les revendications 24 ou 25, dans laquelle la capsule est une capsule selon l'une quelconque des revendications 1 à 17, dans laquelle l'élément annulaire presse une externe des deux saillies vers l'extérieur.

27. Utilisation selon l'une quelconque des revendications 24 à 26, dans laquelle la capsule est une capsule selon l'une quelconque des revendications 1 à 17, et dans laquelle le plateau est axialement espacé du couvercle et le plateau entre les saillies est déplacé par l'élément annulaire à mesure que l'élément de confinement est fermé, poussant les saillies à être inclinées et à s'enrouler vers l'intérieur contre l'extrémité libre de l'élément annulaire.

28. Utilisation selon l'une quelconque des revendications 24 à 27, dans laquelle la capsule est une capsule selon l'une quelconque des revendications 1 à 5 et dans laquelle le fond du creux annulaire est poussé contre le couvercle par l'élément annulaire.

29. Utilisation selon l'une quelconque des revendications 24 à 28, dans laquelle la capsule est une capsule selon la revendication 16 ou 17, et dans laquelle l'élément annulaire a un ou plusieurs ponts entre des crêtes externes et internes, le ou chaque pont constituant une interruption d'un espace annulaire entre les crêtes externes et internes, et dans laquelle l'externe desdites deux saillies s'enroule et se boucle radialement vers l'extérieur où elle est comprimée par le pont.
